(19) Europäisches Patentamt
European Patent Office
Office européen des brevets

(11) Publication number: 0 255 142 B1

(12) # EUROPEAN PATENT SPECIFICATION

(45) Date of publication of the patent specification: **31.10.90**

(51) Int. Cl.⁵: **A63B 69/16**, A63B 71/06, A63B 23/04, A63F 9/22, G09B 9/00

(21) Application number: **87111066.4**

(22) Date of filing: **30.07.87**

(54) **Exercise bicycle apparatus.**

(30) Priority: **01.08.86 JP 182289/86**

(43) Date of publication of application: **03.02.88 Bulletin 88/5**

(45) Publication of the grant of the patent: **31.10.90 Bulletin 90/44**

(84) Designated Contracting States: **DE GB**

(56) References cited:
**EP-A- 0 107 981**
**DE-A- 2 521 110**
**DE-A- 3 021 061**
**DE-A- 3 210 899**
**DE-A- 3 218 086**
**DE-A- 3 301 880**
**DE-A- 3 404 539**
**DE-A- 3 408 303**
**GB-A- 2 114 901**
**US-A- 4 298 893**
**US-A- 4 512 567**

(73) Proprietor: **MIZUNO CORPORATION, No. 25, Okawa-cho Higashi-ku, Osaka-shi Osaka-fu(JP)**

(72) Inventor: **Nobuta, Yoshiji, 1279-2, Gakuenasahimoto-machi, 1-chome, Nara-shi Nara-ken(JP)**

(74) Representative: **Prüfer, Lutz H., Dipl.-Phys., Harthauser Strasse 25d, D-8000 München 90(DE)**

EP 0 255 142 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an exercise biczcle apparatus, according to the generic part of claim 1.

In general, an exercise bicycle is fixed on an indoor floor so that an exerciser pedals the same to rotate the wheel which is applied with rotational resistance, thereby to improve his cardiopneumatic function through exercise for applying a load on his legs. Such exercise must be continued over a prescribed time in order to improve the cardiopneumatic function through the exercise bicycle. This time is measured from effectuation of aerobic energy trap function of muscles, and hence it is believed that at least 12 minutes are required for the exercise.

However, such exercise through the exercise bicycle is extremely monotonous. Thus, it is burdensome for the exerciser to perform monotonous exercise for a long time while applying a load on his body, and hence the exerciser an exercise bicycle apparatus through which an exerciser can take proper exercise according to his condition.

From the DE-A 3 404 539 an exercise bicycle apparatus according to the generic part of claim 1 is known. In this known exercise bicycle apparatus the heart beat is detected and displayed. Therefore the exerciser can see how he reacts on the load imposed by the exercise bicycle apparatus. He can adjust by mental decision how strongly he wants to exercise. However, he may be faulty in estimating the load he is able to suffer. Though the load imposed by the exercise bicycle apparatus may be changed, the exercise bicycle apparatus is relatively inflexible, because the personal constitution of the exerciser has to be programmed into the bicycle.

Accordingly, the principal object of the present invention is to provide an exercise bicycle apparatus, through which the user can positively take effective exercise with interest by automatically controlling a load in response to his condition.

This object is solved by an exercise bicycle apparatus which comprises the features of claim 1.

Therefore a moving image corresponding to an exercise bicycle and an image for influencing the moving image can be displayed on display means so that the exerciser pedals the exercise bicycle while viewing the display on the display means. The rotational speed corresponding to the number of pedalling is detected so that relative display positions of the moving image and the influencing image appearing on the display means are sequentially changed in response to the detected rotational speed. Following the command made by exerciser, the relative display positions of the moving image and the influencing image are displayed to change. Further, physiological condition of the exerciser is detected to control a loading device in response to the detected physiological condition, thereby to increase/decrease resistance force against pedalling.

Thus, according to the present invention, the exerciser can take exercise while playing a video game by viewing the images displayed on the display means, whereby he can positively continuously take exercise with interest, to essentially improve his cardiopneumatic function. Further, the loading device is controlled in response to the physiological condition of the exerciser, whereby an appropriate loading device can be applied in response to his physiological condition.

In a preferred embodiment of the present invention, a moving image and an obstacle image are displayed on display means so that the obstacle image approaches the moving image in response to pedalling while the obstacle image is separated from the moving image in response to a command from the exerciser.

In another preferred embodiment of the present invention, a moving image and a pursuer image for pursuing the moving image are displayed on display means so that the direction of movement of the moving image is changed in response to a command from the exerciser. An image of a flying object is directed from the pursuer image toward the moving image, so that the display of the moving image is changed when the flying image hits the same.

Further, the display means is adapted to display an uphill slope when resistance force against pedalling through a load is increased while displaying a downhill slope when the resistance force is reduced.

These and other objects, features, aspects and advantages of the present invention will become more apparent from the following detailed description of the present invention when taken in conjunction with the accompanying drawings.

Fig. 1 is a sketch drawing showing an embodiment of the present invention;

Fig. 2 is a schematic block diagram of the embodiment;

Fig. 3 is a sectional view showing an example of a switch provided on a grip;

Fig. 4 illustrates contact structure in the switch as shown in Fig. 3;

Fig. 5 is a block diagram showing structure for extracting a pulse signal from the switch as shown in Fig. 3;

Fig. 6 is a block diagram showing structure for extracting a digital signal in response to depression of the switch as shown in Fig. 3;

Fig. 7 illustrates another example of the switch;

Fig. 8 is a sectional view showing still another example of the switch;

Fig. 9 is a plan view showing a further example of the switch;

Fig. 10 is a longitudinal sectional view of the switch as shown in Fig. 9;

Fig. 11 illustrates an example of a loading device;

Fig. 12 illustrates another example of the loading device;

Fig. 13 illustrates examples of images displayed on a CRT display in the embodiment of the present invention;

Figs. 14A to 14C are flow charts for illustrating operation of the embodiment;

Fig. 15 illustrates images displayed on a CRT display in another embodiment of the present invention;

Figs. 16A and 16B are flow charts for illustrating the operation of the second embodiment of the present invention;

Fig. 17 illustrates images displayed on a CRT display in a third embodiment of the present invention; and

Figs. 18A and 18B are flow charts for illustrating the operation of the third embodiment of the present invention.

Fig. 1 is a sketch drawing showing an embodiment of the present invention.

Referring to Fig. 1, description is now made on the structure of this embodiment. A bicycle body 1 includes a frame 2, which is provided with a saddle 3 for an exerciser and a pedal assembly 4 to be worked by the exerciser. When the exerciser is seated on the saddle 3 to work the pedal assembly 4, a wheel 5 is acceleratedly rotated by gears and chain (not shown). In relation to the wheel 5, a brake 6 is provided to serve as a load. The brake 6 is adapted to apply rotational resistance to the wheel 5 when the exerciser operates a brake adjusting knob 7 provided on a handlebar assembly. Clamping force of the brake 6 can be adjusted through the rotational resistance by adjusting in-and-out movement of a wire (not shown) through the brake adjusting knob 7, while the rotational load by the brake 6, i.e., rotational torque is displayed on a brake torque display panel 8. The rotational resistance against the wheel 5 can be increased/decreased by the brake 6 as a loading device on the basis of control by a computer 16 as hereinafter described.

A magnetic sensor 9 is provided in a frame part close to the wheel 5, while a magnet 10 is mounted on the wheel 5. The magnetic sensor 9 is formed by a Hall element, for example, to generate a pulse signal when the same is approached by the magnet 10 upon rotation of the wheel 5. The magnet 10 and the magnetic sensor 9 may be replaced by a photoelectric sensor provided on the frame 2 and a light reflector provided on the wheel 5, to optically detect the rotational speed of the wheel 5.

A left grip 11 of the handlebar assembly is provided with a left pushbutton switch 12 and a right grip 13 is provided with a right pushbutton switch 14. When the left pushbutton switch 12 is operated, a signal is generated from the left pushbutton switch 12 to indicate leftward movement of the bicycle body 1. When the right pushbutton switch 14 is operated to the contrary, a signal is generated from the right pushbutton switch 14 to indicate rightward movement of the bicycle body 1.

A rack 15 is provided in front of the bicycle body 1. The computer 16 is contained in the rack 15 and a CRT display 17 is provided on the rack 15. The CRT display 17 may be replaced by other display means such as a liquid crystal display or a plasma display. The computer 16 performs prescribed processing on the basis of output from the magnetic sensor 9 and the signals from the left and right pushbutton switches 12 and 14 to display picture images on the CRT display 17 as well as to control the brake 6.

Fig. 2 is a schematic block diagram showing electrical structure of the embodiment of the present invention.

Description is now made on the electrical structure of this embodiment with reference to Fig. 2. The computer 16 includes a CPU 21, which is supplied with a clock signal from a clock generator 22. The CPU 21 is connected with a bus 31, which is connected with a system ROM 23, a character ROM 24, a video RAM 25, a display controller 26, a speaker 27, an FDD controller 28, a main memory 29 and an I/O interface 30.

The system ROM 23 stores programs for executing the entire operation of the computer 16. The character ROM 24 is adapted to generate signals indicating numerical values such as the travel distance and the travel speed and characters appearing on the CRT display 17. The video RAM 25 has storage regions corresponding to display regions of the CRT display 17, to store data of picture images to appear on the CRT display 17. The display controller 26 is adapted to control the image data displayed on the video RAM 25. The speaker 27 generates sounds required for a video game. The FDD controller 28 is adapted to control a floppy disk 32. This floppy disk 32 previously stores programs based on flow charts shown in Figs. 14A to 14C as hereinafter described, while forming picture signal generating means for generating a bicycle image signal for displaying an image corresponding to the bicycle body 1, a travel path image signal for displaying a travel path for the bicycle image on the CRT display 17 and obstacle image signals for displaying obstacles such as puddles on the travel path. Such picture signal generating means is not restricted to the floppy disk 32, but may be formed by a ROM or the like.

The main memory 29 stores data operated by the CPU 21, as well as the programs read from the floppy disk 32. The I/O interface 30 is connected with the magnetic sensor 9, the left and right pushbutton switches 12 and 14, a physiological condition detector 80 and the brake 6. The I/O interface 30 supplies the CPU 21 with a pulse signal responsive to the rotational speed received from the magnetic sensor 9 as well as a direction signal received from the left pushbutton switch 12 or the right pushbutton switch 14. The physiological condition detector 80 is adapted to detect the pulse, temperature, amount of perspiration, blood pressure and the like of the exerciser. A pulse sensor is mounted on an earlobe of the exerciser to detect his pulse, while a thermistor thermometer is adapted to detect his temperature and a humidity sensor or the like is employed as a perspiration sensor.

Fig. 3 is a sectional view showing an example of a switch 31 provided on either grip as shown in Fig. 1, and Fig. 4 illustrates contact structure provided within the switch as shown in Fig. 3, while Fig. 5 is a block diagram showing structure for extracting a pulse signal from the switch of Fig. 3, and Fig. 6 is a block diagram showing structure for extracting a digital signal in response to depression of the switch as shown in Fig. 3.

With reference to Figs. 3 to 6, description is made on the structure of the switch 31. A pipe 32 of the handlebar assembly has a flexible printed board 33, which is provided with a contact 36 as shown in Fig. 4. This contact 36 includes an opposite pair of comb-shaped electrodes 331 and 332, and a pressure-sensitive conductive rubber member 34 is provided to cover the electrodes 331 and 332. A foaming grip 35 is provided to cover the pressure-sensitive conductive rubber member 34, the flexible printed board 33 and the bicycle handle pipe 32. When the pressure-sensitive conductive rubber member 34 is manually pressed through the foaming grip 35, the electrodes 331 and 332 are brought into contact with each other by the pressure-sensitive conductive rubber member 34, to turn on the contact 36.

Output from the contact 36 of the switch 31 in the aforementioned structure is supplied to a one-shot multivibrator 37 as shown in Fig. 5, so that the one-shot multivibrator 37 generates a pulse every time the foaming grip 35 is pressed to close the contact 36, which pulse is supplied to the CPU 21 as shown in Fig. 2 through the I/O interface 30. The CPU 21 changes the direction of the bicycle image in response to the number of supplied pulses.

In order to generate a digital direction signal in response to depression of the pressure-sensitive switch 31, the output from the contact 36 is supplied to an A-D converter 38 as shown in Fig. 6, to supply the digital signal from the I/O interface 30 to the CPU 21.

Fig. 7 shows another example of the switch provided on the handlebar assembly. In the example as shown in Fig. 7, a rotary switch 40 is provided on the grip. A bicycle handle pipe 41 has a fixed inner ring 42, which is provided with a fixed contact 45. The fixed inner ring 42 is covered by a rotating grip 44, which is coupled to the fixed inner ring 42 by a compression spring 43. The rotating grip 44 is provided with a movable contact 46. Thus, when the rotating grip 44 is rotated in a direction A, the movable contact 46 provided thereon is brought into contact with the fixed contact 45 provided on the fixed inner ring 42 to close the same. The rotary switch 40 of Fig. 7 may be connected to the one-shot multivibrator 37 as shown in Fig. 5, to generate a pulse signal from the one-shot multivibrator 37.

Fig. 8 is a sectional view showing still another example of a switch provided on the grip. Shown in Fig. 8 is a pressure-sensitive element 50, which is provided with a flexible tube 53 between a bicycle handle pipe 51 and a foaming grip 55. The flexible tube 53 is sealed with a gas 54. A pressure sensor 52 is provided in the bicycle handle pipe 55, to communicate with the flexible tube 53. Thus, when the foaming grip 55 is manually pressed, the gas 54 within the flexible tube 53 is introduced under pressure into the pressure sensor 52, which in turn generates a signal. The signal from the pressure sensor 52 is supplied to the one-shot multivibrator 37 as shown in Fig. 5, to generate a pulse signal. In order to generate a digital signal responsive to the pressure applied to the foaming grip 55, the output of the pressure sensor 52 may be supplied to the A-D converter 38 as shown in Fig. 6.

Fig. 9 is a plan view showing still another example of a handle switch, and Fig. 10 is a longitudinal sectional view thereof.

Referring to Figs. 9 and 10, a disc 62 is fixed to an axial pipe 61 of the handlebar assembly, to be rotated upon horizontal rotation of the handlebar assembly. The disc 62 is partially provided with a projection 63 on its peripheral edge. A pair of photo interrupters 64 and 65 are provided on the left side and another pair of photo interrupters 66 and 67 are provided on the right side to sandwich the projection 63.

As is well known in the art, each of the photo interrupters 64 to 67 has a light emission diode and a photo transistor opposite to the same. When the disc 62 is rotated upon horizontal rotation of the handlebar assembly and light from the light emission diode of any of the photo interrupters 64 to 67 is shielded by the projection 63, the corresponding photo transistor detects no light, thereby to detect the rotation of the handle assembly. The corresponding one of the photo interrupters 64 to 67 generates a signal indicating the direction in response to the angle of horizontal rotation of the handlebar assembly.

Fig. 11(a) is a side sectional view and Fig. 11(b) is a front elevational view showing an example of the brake as shown in Figs. 1 and 2.

The brake 6 includes a rotary drum 71 coaxially rotated with the wheel 5 and a plurality of coils 72 provided in the inner side of the rotary drum 71. When the coils 72 are energized, eddy current flows in the drum 71 to apply a load on the wheel 5 through the rotary drum 71.

Fig. 12 shows another example of the brake. The brake shown in Fig. 12 has a belt 74 wound around the outer peripheral part of a disc 73. An end of the belt 74 is fixed and the other end thereof is provided with a coil spring 75. A cylinder 76 is mounted on the other end of the belt 74 to vary tension of the belt 74, thereby to make the load on the wheel 5 variable through the disc 73.

The principle of a generator may be employed for the brake 6.

Fig. 13 illustrates examples of images displayed on the CRT display in the embodiment of the present invention, and Figs. 14A to 14C are flow charts for illustrating operation for playing a video game on the CRT display.

With reference to Figs. 1 to 14C, description is now made on the operation for playing the video game. As shown in Fig. 13, the CRT display 17 displays an image 171 corresponding to the bicycle, an image 172 of a travel path for the bicycle, images 173 and 174 of obstacles such as puddles, an image 175 of an obstacle such as a rock and images 176, 177 and 178 of mountains and an image 179 of a cloud etc. for forming the background.

When the exerciser is seated on the saddle 3 of the bicycle body 1 as shown in Fig. 1 to work the pedal assembly 4, the travel path image 172, the obstacle images 173 to 175 and the like sequentially pass by the bicycle image 171. When the obstacle image 175 approaches the bicycle image 171, the exerciser operates the left pushbutton switch 12 or the right pushbutton switch 14 in order to avoid the obstacle image 175. If the bicycle image 171 comes out of the travel path 172 or bumps into the obstacle image 173, 174 or 175, the video game computer programs enters a fail state. Such a fail state may be caused when the pedal assembly 4 is not rotated over a prescribed number of times within a prescribed period, to bring down the bicycle image 171.

The video game computer programs is not recovered from the fail state unless the pedal assembly 4 is rotated over a prescribed number of times within a prescribed period. When the obstacle images 173 to 175 are avoided, points are scored to be displayed on an auxiliary screen 180 of the CRT display 17. The auxiliary screen 180 can analogously display the elapsed time from starting of the exercise, the angle of inclination of the travel path 172 if the same is a slope and the travel speed, so that the exerciser can enjoy the video game while taking exercise.

When power is applied for the apparatus, the CPU 21 clears registers etc. contained therein at a step SP1 as shown in Fig. 14A, to perform initialization. At a step SP2, the CPU 21 reads image data of the initial screen to appear on the CRT display 17 from the floppy disk 32 through the FDD controller 28, to write the same in the video RAM 25. The display controller 26 makes the initial screen appear on the CRT display 17 on the basis of the image data written in the video RAM 25. At a step SP3, the CPU 21 determines whether or not the time is up. This time is set for a minimum period required for improving the cardiopneumatic function of the exerciser, e.g., for 12 minutes. This time is counted by a timer (not shown) contained in the I/O interface 30. This time may be counted in a software manner by a program.

When a determination is made at the step SP3 that the time is not up, the CPU 21 fetches the rotational speed of the wheel 5 at a step SP5. When the exerciser works the pedal assembly 4, the wheel 5 is rotated so that the magnetic sensor 9 detects magnetic force by the magnet 10 mounted on the wheel 5, and a counter (not shown) contained in the I/O interface 30 counts detected pulses to supply the counter output to the CPU 21. At a step SP6, the CPU 21 performs rotational speed processing. Namely, the CPU 21 subtracts a constant value $\alpha$ from the operated rotational speed when the travel path 172 is an uphill slope while adding the constant value $\alpha$ to the operated rotational speed when the travel path 172 is a downhill slope to calculate the travel speed of the bicycle image 171 on the display screen, thereby to operate distances to the obstacle images 173 to 175 and the like.

At a step SP7, the CPU 21 determines whether or not the apparatus is in the fail state. Namely, the CPU 21 determines whether or not the bicycle image 171 is out of the travel path 172 or the same bumps into the obstacle image 173, 174 or 175. Since the apparatus is not recovered from the fail state unless the pedal assembly 4 is worked over a prescribed number of times within a prescribed period, the CPU 21 increases the rotational speed of the wheel 5 at a step SP8 upon pedalling by the exerciser. The CPU 21 determines whether or not the increased speed exceeds a predetermined value N at a step SP9, and if the determination is of no, the CPU 21 indicates the fail state at a step SP10. Namely, the CPU 21 makes a mark (not shown) indicating the fail state or the like appear on the CRT display 17. If the increased speed exceeds the predetermined value N, the CPU 21 cancels the fail state at a step SP11.

When a determination is made at the step SP7 that the apparatus is not in the fail state, the CPU 21 calculates the distance and performs mapping processing at a step SP12. Namely, when the wheel 5 is rotated by a prescribed number of times through pedalling by the exerciser, the CPU 21 operates the travel distance to perform arithmetic on timing for displaying the current background image, the obstacle image and the like. The CPU 21 determines at a step SP13 whether or not the screen is to be the background image changed, and if the determination is of yes, the CPU 21 performs the background image change processing at a step SP14, to be returned to the step SP3. If the determination at the step SP13 is of no, the process is advanced to a step SP15, at which the CPU 21 determines whether or not the right pushbutton switch 14 is operated, and if the determination is of no, the CPU 21 determines whether or not the left pushbutton switch 12 is operated at a step SP16.

If neither of the left and right pushbutton switches 12 and 14 are operated, the CPU 21 determines whether or not the puddle image 173 is to be displayed as a first obstacle, and the process is advanced to a step SP19 if the determination is of no, while the obstacle image 173 is displayed at a step SP18 if the determination is of yes. At the step SP19, the CPU 21 determines whether or not the puddle image 174 is to be displayed as a second obstacle, so that the process is advanced to a step SP21 if the determination is of no while the obstacle image 174 is displayed at a step SP20 if the determination is of yes. At the step SP21, the CPU 21 determines whether or not the rock image 175 is to be displayed, so that the process is advanced to a step SP23 if the determination is of no while the obstacle image 175 is displayed at a step SP22 if the determination is of yes. Guard lines are displayed at the step SP23 to indicate the travel path 172, and a tree image 181 is displayed in the vicinity of the travel path 172 at a step SP24.

At a step SP43, the CPU 21 determines whether or not the exerciser still has enough physical strength against resistance by the brake 6, on the basis of detection output from the physiological condition detector 80. If the determination is of yes, the CPU 21 controls the brake 6 to increase the resistance against the rotation of the wheel 5 at a step SP44, while the CPU 21 reduces the resistance at a step SP45 if the determination is of no.

The CPU 21 displays the cloud image 179 at a step SP46, and further displays the mountain images 176 to 178 at a step SP47. The CPU 21 further displays the bicycle image 171 at a step SP48 and determines whether or not the auxiliary screen 180 is to be displayed at a step SP49, to display the auxiliary screen 180 at a step SP50 if the determination is of yes. Namely, the score and the time are digitally displayed and the angle of inclination and the speed are sequentially analogously displayed on the auxiliary screen 180, and the process is returned to the step SP3. The speed may be displayed in digital figures.

The aforementioned operation is repeated and when the exerciser operates, e.g., the left pushbutton switch 14 to avoid an obstacle, the CPU 21 determines that the left pushbutton switch 14 is operated at the step SP16. Then the background screen is scrolled to the right at the step SP25, and then the processing of the steps SP26 to SP31 is performed similarly to the steps SP17 to SP22, in order to display the obstacle images 173 to 175 on the rightwardly scrolled background screen. Further, the guard lines for the travel path 172 are displayed on the rightwardly scrolled background screen at the step SP30 and the tree 181 is displayed at a step SP33. Thereafter the processing of the steps SP43 to SP50 is performed.

If the exerciser operates the right pushbutton switch 14, the background screen is scrolled to the left at a step SP34 to display the obstacle images 173 to 175 at steps SP35 to SP40, while the guard lines for the travel path 172 are displayed on the leftwardly scrolled background screen at a step SP41 and the tree 181 is displayed at a step SP42. Then the processing at the steps SP43 to SP50 is performed. The aforementioned operation is repeatedly performed so far as the exerciser continues his exercise.

In the aforementioned embodiment, the obstacle images 173 to 175 are displayed on the travel path 172 and the left pushbutton switch 12 or the right pushbutton switch 14 is operated to avoid the same, whereby the background screen is scrolled so that the bicycle image 171 can avoid the obstacle images. However, the manner of avoiding the obstacles is not restricted to the above, but the speed for working the pedal assembly 4 within a prescribed period may be increased so that the bicycle image 171 can jump over the obstacle images. Further, the travel path 172 may not be linearly displayed but the same may be curved or displayed as a mountaneous image.

Fig. 15 illustrates images displayed on the CRT display according to another embodiment of the present invention, and Figs. 16A and 16B are flow charts for illustrating the operation of this embodiment.

As shown in Fig. 15, a travel path image 201, a bicycle image 202 and a competitor bicycle image 203 are planarly displayed on the display screen of the CRT display 17. The travel path 201 is downwardly moved on the display screen, and the bicycle image 202 is moved to the left or right in response to operation of the left pushbutton switch 12 or the right pushbutton switch 14. The competitor bicycle image 203 is vertically and horizontally moved on the display screen, to obstruct movement of the bicycle image 202. When the exerciser operates the left pushbutton switch 12 or the right pushbutton switch 14 while increasing the pedalling speed, the bicycle image 202 outruns the competitor bicycle image 203.

Points are scored when the bicycle image 202 outruns the competitor bicycle image 203. When the competitor bicycle image 203 is immediately in front of the bicycle image 202, the exerciser simultaneously operates the left and right pushbutton switches 12 and 14 so that the bicycle image 202 discharges a bullet as a flying object, which bullet hits the competitor bicycle image 203 to bring down the same and score points. Thus, the exerciser can enjoy the video game while taking exercise.

In more concrete terms, the CPU 21 performs similar operation to the steps SP1 to SP13 of Fig. 14A at steps SP101 to SP113 as shown in Fig. 16A. However, at the step SP107 for fail state determination, the CPU 21 determines whether or not the bicycle image 202 is out of the travel path 201 or the same runs against the competitor bicycle image 203. When scroll processing is performed at the step SP113, the CPU 21 determines whether or not the left and right pushbutton switches 12 and 14 are simultaneously operated at a step SP115. If the determination is of yes, the CPU 21 displays the bullet as if the same is discharged from the bicycle image 202 at a step SP116. At a step SP117, the CPU 21 determines whether or not the bullet hits the competitor bicycle image 203, and if the determination is of yes, the CPU 21 performs hit processing at a step SP118 to bring down the competitor bicycle image 203 while increasing the score.

At a step SP119, the CPU 21 determines whether or not the travel path 201 forming the background screen is to be scrolled to the right. This is because the travel path 201 is programmed to horizontally wind on the display screen of the CRT display 17, and if the determination is of no, the CPU 21 determines whether or not the background screen is to be scrolled to the left at a step SP120. When the determination is of no, tree images 204 are displayed at a step SP121 and a guard rail 205 is displayed at a step SP122. If the background screen is determined to be scrolled to the right at the step SP119, the travel path 201 is moved to the right on the display screen at a step SP123 and the tree images 204 are moved to the right on the display screen at a step SP124, while the guard rail 205 is also moved to the right on the display screen at a step SP125. When the background screen is determined to be scrolled to the left at the step SP120, the travel path 201 is moved to the left on the display screen at a step SP126 and the trees 204 are moved to the left at a step SP127, while the guard rail 205 is also moved to the left at a step SP128.

At a step SP129, the CPU 21 horizontally and vertically moves the competitor bicycle image 203 on the display screen. At a step SP130, the CPU 21 determines whether or not the right pushbutton switch 14 is operated, and if the determination is of yes, the CPU 21 moves the bicycle image 202 to the right at a step SP132. If the right pushbutton switch 14 is not operated, the CPU 21 determines whether or not the left pushbutton switch 12 is operated at a step SP131, and if the determination is of yes, the CPU 21 moves the bicycle image 202 to the left at a step SP133. At a step SP134, the CPU 21 determines whether or not the auxiliary screen 180 is to be displayed, and if the determination is of yes, the CPU 21 makes the auxiliary screen 180 display the score, travel distance, exercise time, speed and the like. At a step SP136, the CPU 21 determines whether or not the exerciser still has enough physical strength against the load applied by the brake 6 on the basis of detection output from the physiological condition detector 80. If the determination is of yes, the CPU 21 controls the brake 6 at a step SP137 to increase resistance against the wheel 5, while the CPU 21 controls the brake 6 to reduce the resistance at a step SP138 if the determination at the step SP136 is of no.

In the embodiment as hereinabove described, the travel path 201 is vertically moved and the competitor bicycle image 203 is displayed to obstruct the bicycle image 202 on the display screen of the CRT display 17, and the exerciser operates the left pushbutton switch 12 or the right pushbutton switch 14 while working the pedal assembly 4 at a high speed, so that the bicycle image 202 outruns the competitor bicycle image 203. When the competitor bicycle image 203 is immediately in front of the bicycle image 202, the exerciser simultaneously operates the left and right pushbutton switches 12 and 14 so that the bicycle image 202 discharges the bullet to hit the competitor bicycle image 203, which in turn is eliminated from the display screen.

Perspiration may drip from the competitor bicycle image 203 so that the bicycle image 202 slips and falls if the same runs over the perspiration.

Fig. 17 illustrates images displayed on the CRT display in still another embodiment of the present invention, and Figs. 18A and 18B are flow charts for illustrating the operation of this embodiment.

In this embodiment, images 301 indicating a plurality of houses are displayed on the display screen of the CRT display 17, so that a bicycle image 302 forwardly and horizontally runs among the images 301. Pursuer images 303 are displayed to pursue the bicycle image 302, and when one of the pursuer images 303 bumps into the bicycle image 302, the bicycle image 302 is brought down and the score is graded down. Further, diamond images 304 serving as targets are displayed on the display screen so that the exerciser works the pedal assembly 4 while operating the left pushbutton switch 12 or the right pushbutton switch 14 to throw off the pursuer images 303 and catch the diamond images 304, whereby the score displayed on the auxiliary screen 180 is increased.

When the pursuer image 303 comes in front of the bicycle image 302 in this embodiment, the exerciser simultaneously operates the left and right pushbutton switches 12 and 14 to discharge a bullet. When the bullet hits the pursuer image 303, the pursuer image 303 is crushed and eliminated from the display screen.

Image processing for the above video game is performed on the basis of the flow charts as shown in Figs. 18A and 18B. Referring to Fig. 18A, operation at steps SP201 to SP218 is identical to that at the steps SP101 to SP118 as shown in Fig. 16A, and hence description thereof is omitted. At a step SP219, the CPU 21 determines whether or not the right pushbutton switch 14 is operated. If the determination is of yes, the CPU 21 turns the bicycle image 302 to the right. If the determination at the step SP219 is of no and a determination is made that the left pushbutton switch 12 is operated at a step SP221, the CPU 21 turns the bicycle image 302 to the left at a step SP22. The CPU 21 forwardly moves the bicycle image 302 at a step SP223, and displays the diamond image 304 at a step SP224. At a step SP225, the CPU 21 determines whether or not the bicycle image 302 catches the diamond image 304, and if the determination is of yes, the CPU 21 increases the score at a step SP226. Then the CPU 21 displays a plurality of pursuer images 303 at a step SP227 and determines whether or not the auxiliary screen 180 is to be displayed at a step SP228, to display the auxiliary screen 180 at a step SP229 if the determination at the step SP228 is of yes. At a step SP230, the CPU 21 determines whether or not the exerciser has enough physical strength against resistance provided by the brake 6 on the basis of detection output from the physiological condition detector 80, to control the brake 6 to increase the resistance against rotation of the wheel 5 at a step SP231 if the determination is of yes, while controlling the brake 6 to reduce the resistance at a step SP232 if the determination is of no.

## Claims

1. An exercise bicycle apparatus comprising: an exercise bicycle (1) having a pedal assembly (4) to be worked by an exerciser;

a load (6) for applying resistance against rotation of said pedal assembly (4);

rotational speed detecting means (9, 10) for detecting the rotational speed corresponding to rotation of said pedal assembly (4);

picture signal generating means (26) for generating picture signals indicating a moving image (171) expressing a moving object corresponding to said exercise bicycle (1) and an image (172 –179) for influencing said moving image (171);

display means (17) for displaying said moving image (171) and said influencing image (172-179) on the basis of said picture signals generated by said picture signal generating means (26);

command means (21) for issuing a command for changing relative display positions of said moving image (171) and said influencing image (172–179);

physiological condition detecting means (80) for detecting physiological condition of said exerciser; and

control means (21) for displaying said moving image (171) and said influencing image (172–179) so that said relative display positions thereof are sequentially changed in response to said rotational speed detected by said rotational speed detecting means (9, 10) while displaying said moving image (171) and said influencing image (172–179) so that said display positions thereof can be opposed to change in response to a command from said command means, characterized in that said control means (21) increases/decreases the resistance force against rotation of said pedal assembly through said load in response to detection output from said physiological condition detecting means (80).

2. An exercise bicycle apparatus in accordance with claim 1, wherein
said picture signal generating means includes means for generating a picture signal indicating the image of an obstacle for obstructing movement of said moving image as said influencing image as well as a picture signal indicating a background image, and
said control means includes means for displaying said moving image fixedly in a predetermined vertical position on the display screen of said display means, moving said background image and displaying said moving image to sequentially approach said obstacle image on the basis of detection output of said rotational speed detecting means and displaying said obstacle image can be separated from said moving image in response to a command from said command means.

3. An exercise bicycle apparatus in accordance with claim 1, wherein
said picture signal generating means includes means for generating a picture signal indicating an obstacle image for obstructing movement of said moving image as said influencing image as well as a picture signal indicating a background image, and
said control means includes means for displaying said moving image fixedly in a predetermined vertical position on the display screen of said display means, moving said background image and displaying said obstacle image to sequentially approach said moving image on the basis of detection output from said rotational speed detecting means and displaying said moving image can be separated from said obstacle image in response to a command from said command means.

4. An exercise bicycle apparatus in accordance with claim 1, wherein
said picture signal generating means includes means for generating a picture signal indicating a pursuer image for pursuing said moving image as said influencing image as well as a picture signal indicating a background image, and
said control means includes means for displaying said background image fixedly on the display screen of said display means, displaying said moving image to be moved on said display screen of said display means on the basis of detection output from said rotational speed detecting means while displaying said pursuer image to pursue said moving image and changing the direction of movement of said moving image in response to a command from said command means.

5. An exercise bicycle apparatus in accordance with claim 1, wherein
said picture signal generating means includes means for generating a picture signal for indicating an uphill slope or a downhill slope, and
said control means includes means for making said display means display said uphill slope when resistance force against rotation of said pedal assembly through said load is increased while making said display means display said downhill slope when said resistance force is reduced.

6. An exercise bicycle apparatus in accordance with claim 1, wherein
said exercise bicycle includes a handlebar assembly,
said picture signal generating means includes means for generating a picture signal indicating a flying object discharged from said moving image,
said command means includes direction signal generating means for generating a direction signal indicating a left or right direction in response to leftward or rightward operation of said handlebar assembly, and
said control means includes means for moving said moving image appearing on said display means to the left or right in response to generation of said direction signal indicating said left or right direction from said direction signal generating means, displaying said flying object image from said moving image appearing on said display means toward said influencing image in response to simultaneous generation of direction signals indicating left and right directions from said direction signal generating means and changing display of said influencing image when said flying object image hits said obstacle image.

7. An exercise bicycle apparatus in accordance with claim 1, wherein
said control means includes means for operating the travel distance on the basis of said rotational speed detected by said rotational speed detecting means and making said display means digitally or analogously display said operated travel distance.

8. An exercise bicycle apparatus in accordance with claim 1, wherein
said control means includes means for operating the travel speed on the basis of said rotational speed detected by said rotational speed detecting means and making said display means digitally or analogously display said operated travel speed.

9. An exercise bicycle apparatus in accordance with claim 1, wherein
said control means includes means for displaying said moving image to fall down when said rotational speed detected by said rotational speed detecting means is smaller than a predetermined value.

10. An exercise bicycle apparatus in accordance with claim 1, wherein
said exercise bicycle includes a wheel rotated in response to working of said pedal assembly, and
said rotational speed detecting means includes a magnetic sensor for generating a pulse signal in response to rotation of said wheel.

11. An exercise bicycle apparatus in accordance with claim 1, wherein
said exercise bicycle includes a wheel rotated in response to working of said pedal assembly, and
said rotational speed detecting means includes a photoelectric sensor for generating a pulse signal in response to rotation of said wheel.

12. An exercise bicycle apparatus in accordance with claim 6, wherein
said direction signal generating means includes switches provided in correspondence to left and right handlebars of said exercise bicycle respectively.

13. An exercise bicycle apparatus in accordance with claim 12, wherein
said handlebars include grips, said switches including pressure-sensitive switches for closing contacts of said grips upon manual holding of said handlebars.

14. An exercise bicycle apparatus in accordance with claim 13, wherein
said handlebars include grips,
said switches including rotary switches for closing contacts of said grips upon manual rotation of said handlebars.

15. An exercise bicycle apparatus in accordance with claim 12, wherein
said switches include a photoelectric switch for generating a direction signal by rotating said handlebars in a left or right direction in excess of a predetermined angle.

16. An exercise bicycle apparatus in accordance with claim 1, wherein
said load includes means for applying frictional resistance against rotation of said wheel.

17. An exercise bicycle apparatus in accordance with claim 1, wherein
said load includes:
a drum coaxially provided with said wheel, and
coils for making eddy current flow in said drum.

said pedal assembly through said load in response to detection output of said physiological condition detecting means.

## Patentansprüche

1. Übungsfahrradgerät, mit:
einem von einem Übenden zu betätigenden Übungsfahrrad (1) mit einer Pedalanordnung (4);
einer Last (6) zum Anlegen eines Widerstandes gegen die Rotation der Pedalanordnung (4);
einer Drehgeschwindigkeitserfassungseinrichtung (9, 10) zum Erfassen der der Rotation der Pedalanordnung (4) entsprechenden Drehgeschwindigkeit;
einer Bildsignalerzeugereinrichtung (26) zum Erzeugen von Bildsignalen, die ein bewegendes Abbild (171), das ein dem Übungsfahrrad (1) entsprechendes bewegendes Objekt wiedergibt, und ein Abbild (172-179) zum Beeinflussen des bewegenden Abbildes (171) darstellen;
einer Anzeigeeinrichtung (17) zum Anzeigen des bewegenden Abbildes (171) und des beeinflussenden Abbildes (172-179) auf der Basis der durch die Bildsignalerzeugereinrichtung (26) erzeugten Bildsignale;
einer Befehlseinrichtung (21) zum Ausgeben eines Befehles zum Ändern der relativen Anzeigepositionen des bewegenden Abbildes (171) und des beeinflussenden Abbildes (172-179); eine Physiologie-Zustandserfassungseinrichtung (80) zum Erfassen des physiologischen Zustandes des Übenden; und einer Steuereinrichtung (21) zum Anzeigen des bewegenden Abbildes (171) und des beeinflussenden Abbildes (172-179) so, daß ihre relativen Positionen aufeinanderfolgend als Reaktion auf die durch die Drehgeschwindigkeitserfassungseinrichtung (9, 10) erfaßte Drehgeschwindigkeit geändert werden, während das bewegende Abbild (171) und das beeinflussende Abbild (172 - 179) so angezeigt werden, daß ihre Anzeigepositionen gegenübergestellt werden können als Reaktion auf einen Befehl von der Befehlseinrichtung, dadurch gekennzeichnet, daß die Steuereinrichtung (21) die Widerstandskraft gegen die Rotation der Pedalanordnung durch die Last als Reaktion auf den erfaßten Ausgang der Physiologie-Zustandserfassungseinrichtung (80) erhöht oder erniedrigt.

2. Übungsfahrradgerät nach Anspruch 1, bei dem die Bildsignalerzeugereinrichtung eine Einrichtung zum Erzeugen eines Bildsignales, das das Abbild eines Hindernisses zum Behindern der Bewegung des Bewegenden abbildet, als das beeinflussende Abbild zeigt, und ein Bildsignal, das ein Hintergrundsabbild zeigt, aufweist, und daß die Steuereinrichtung eine Einrichtung zum Darstellen des bewegenden Abbildes fest in einer vorbestimmten vertikalen Position auf dem Anzeigeschirm der Anzeigeeinrichtung, zum Bewegen des Hintergrundabbildes und zum Darstellen, daß das bewegende Abbild sich nacheinander dem Hindernisabbild nähert, auf der Basis des Erfassungsausganges der Drehgeschwindigkeitserfassungeinrichtung und zum Darstellen, daß das Hindernisabbild von dem bewegenden Abbild als Reaktion auf einen Befehl von der Befehlseinrichtung getrennt werden kann, aufweist.

3. Übungsfahrradgerät nach Anspruch 1, bei dem die Bildsignalerzeugereinrichtung eine Einrichtung zum Erzeugen eines Bildsignales, das ein Hindernisabbild zur Behinderung der Bewegung des bewegenden Abbildes und das beeinflussende Abbild zeigt, und ein Bildsignal, das ein Hintergrundsabbild zeigt, aufweist, und daß die Steuereinrichtung eine Einrichtung zum Darstellen des bewegenden Abbildes fest in einer vorbestimmen vertikalen Position auf dem Anzeigeschirm der Anzeigeeinrichtung, zum Bewegen des Hintergrundabbildes und Darstellen des Hindernisabbildes, das sich nacheinander dem bewegenden Abbild nähert, auf der Basis des Erfassungsausganges von der Drehgeschwindigkeitserfassungseinrichtung und zum Darstellen, daß das bewegende Abbild von dem Hindernisabbild als Reaktion auf einen Befehl von der Befehlseinrichtung getrennt werden kann, aufweist.

4. Übungsfahrradgerät nach Anspruch 1, bei dem die Bildsignalerzeugereinrichtung eine Einrichtung zum Erzeugen eines Bildsignales, das ein Verfolgerabbild zum Verfolgen des bewegenden Abbildes als das beeinflussende Abbild zeigt, und eines Bildsignales, das ein Hintergrundabbild zeigt, aufweist, und daß die Steuereinrichtung eine Einrichtung zum Darstellen des Hintergrundabbildes fest auf dem Anzeigeschirm der Anzeigeeinrichtung, zum Darstellen des bewegenden Abbildes zum Bewegen auf dem Anzeigeschirm der Anzeigeeinrichtung auf der Basis des Erfassungsausganges von der Drehgeschwindigkeitserfassungseinrichtung, während das Verfolgerabbild zum Verfolgen des bewegenden Abbildes dargestellt wird und. die Richtung der Bewegung des bewegenden Abbildes als Reaktion auf einen Befehl von der Befehlseinrichtung geändert wird, aufweist.

5. Übungsfahrradgerät nach Anspruch 1, bei dem die Bildsignalerzeugereinrichtung eine Einrichtung zum Erzeugen eines Bildsignales zum Anzeigen einer Aufwärtsneigung oder einer Abwärtsneigung aufweist, und die Steuereinrichtung eine Einrichtung zum Bewirken, daß die Anzeigeeinrichtung eine Aufwärtsneigung darstellt, wenn die Widerstandskraft gegen die Rotation der Pedalanordnung durch die Last erhöht wird, während sie bewirkt, daß die Anzeigeeinrichtung eine Abwärtsneigung zeigt, wenn die Widerstandskraft verringert wird, aufweist.

6. Übungsfahrradgerät nach Anspruch 1, bei dem das Übungsfahrrad eine Lenkstangenanordnung aufweist, die Bildsignalerzeugereinrichtung eine Einrichtung zum Erzeugen eines Bildsignales, das ein fliegendes, von dem bewegenden Abbild ausgestoßenes Objekt zeigt, aufweist, die Befehlseinrichtung eine Richtungssignalerzeugereinrichtung zum Erzeugen eines Richtungssignales, das eine linke oder eine rechte Richtung als Reaktion auf die Betätigung der Lenkstangenanordnung nach links oder nach rechts zeigt, aufweist, und die Steuereinrichtung eine Einrichtung zum Bewegen des auf der Anzeigeeinrichtung erscheinenden bewegenden Abbildes nach links oder rechts als Reaktion auf das Erzeugen des Richtungssignales, das die linke oder rechte Richtung anzeigt, von der Richtungssignalerzeugereinrichtung, zum Darstellen des auf der Anzeigeeinrichtung erscheinenden Abbildes des fliegenden Objektes von dem bewegenden Abbild zu dem beeinflussenden Abbild als Reaktion auf das gleichzeitige Erzeugen von Richtungssignalen, die die linke und rechte Richtung anzeigen, von der Richtungssignalerzeugereinrichtung und zum Ändern der Darstellung des beeinflussenden Abbildes, wenn das Abbild des fliegenden Objektes das Hindernisabbild trifft, aufweist.

7. Übungsfahrradgerät nach Anspruch 1, bei dem die Steuereinrichtung eine Einrichtung zum Betätigen der zurückgelegten Entfernung auf der Basis der durch die Drehgeschwindigkeitserfassungseinrichtung erfaßten Drehgeschwindigkeit und zum Bewirken, daß die Anzeigeeinrichtung digital oder analog die betätigte zurückgelegte Entfernung anzeigt, aufweist.

8. Übungsfahrradgerät nach Anspruch 1, bei dem die Steuereinrichtung eine Einrichtung zum Betätigen der Fahrgeschwindigkeit auf der Basis der durch die Drehgeschwindigkeitserfassungseinrichtung erfaßten Drehgeschwindigkeit und zum Bewirken, daß die Anzeigeeinrichtung digital oder analog die betätigte Fahrgeschwindigkeit anzeigt, aufweist.

9. Übungsfahrradgerät nach Anspruch 1, bei dem die Steuereinrichtung eine Einrichtung zum Darstellen, daß das bewegende Abbild herunterfällt, wenn die durch die Drehgeschwindigkeitserfassungseinrichtung erfaßte Drehgeschwindigkeit kleiner als ein vorbestimmter Wert ist, aufweist.

10. Übungsfahrradgerät nach Anspruch 1, bei dem das Übungsfahrrad ein als Reaktion auf das Betätigen der Pedalanordnung gedrehtes Rad aufweist, und die Drehgeschwindigkeitserfassungseinrichtung einen magnetischen Sensor zum Erzeugen eines Impulssignales als Reaktion auf die Drehung des Rades aufweist.

11. Übungsfahrradgerät nach Anspruch 1, bei dem das Übungsfahrrad ein als Reaktion auf die Betätigung der Pedalanordnung gedrehtes Rad aufweist, und die Drehgeschwindigkeitserfassungseinrichtung einen fotoelektrischen Sensor zum Erzeugen eines Impulssignales als Reaktion auf die Drehung des Rades aufweist.

12. Übungssfahrradgerät nach Anspruch 6, bei dem die Richtungssignalerzeugereinrichtung Schalter aufweist, die entsprechend der linken bzw. der rechten Lenkstange des Übungsfahrrades vorgesehen sind.

13. Übungsfahrradgerät nach Anspruch 12, bei dem die Lenkstange Handgriffe aufweist, die Schalter druckempfindliche Schalter zum Schließen von Kontakten der Handgriffe auf das manuelle Halten der Lenkstange hin aufweisen.

14. Übungsfahrradgerät nach Anspruch 13, bei dem die Lenkstange Handgriffe aufweist, die Schalter Drehschalter zum Schließen von Kontakten der Handgriffe auf die manuelle Drehung der Lenkstange hin aufweisen.

15. Übungsfahrradgerät nach Anspruch 12, bei dem die Schalter einen fotoelektrischen Schalter zum Erzeugen eines Richtungssignales durch Drehen der Lenkstange in eine linke oder rechte Richtung weiter als ein vorbestimmter Winkel aufweisen.

16. Übungsfahrradgerät nach Anspruch 1, bei dem die Last eine Einrichtung zum Anlegen eines Reibungswiderstandes gegen die Drehung des Rades aufweist.

17. Übungsfahrradgerät nach Anspruch 1, bei dem die Last eine koaxial mit dem Rad vorgesehene Trommel und Spulen zum Erzeugen eines Wirbelstromes in der Trommel aufweist.

**Revendications**

1. Appareil vélo d'entraînement comprenant:

un vélo d'entraînement (1) pourvu d'une unité de pédales (4) à l'actionnement par une personne s'entraînante;

une charge (6) pour l'application d'une résistance contre la rotation de ladite unité de pédales (4);

des moyens (9, 10) détecteur de la vitesse de rotation pour détecter la vitesse de rotation qui correspond à la rotation de ladite unité de pédales (4);

des moyens (26) générateur des signaux d'image pour générer des signaux d'image visualisants une image mobile (171) représentante un object mobile correspondant au vélo d'entraînement (1) ainsi qu'une image (172-179) intervenante dans ladite image mobile (171);

des moyens de visualisation (17) pour visualiser ladite image mobile (171) et ladite image intervenante (172-179) sur la base desdits signaux d'image générés par lesdits moyens générateur de signal d'image (26); des moyens (21) d'instruction pour la sortie d'une instruction à changer des positions relatives de visualisation de ladite image mobile (171) et de ladite image intervenante (172-179);

des moyens détecteur (80) de l'état physique qui détecte l'état physique de la personne s'entraînante; ainsi que des moyens de com mande (21) pour la visualisation de ladite image mobile (171) et de ladite image intervenante (172-179) d'une façon que les positions relatives visualisées des images soient changées en séquence en réponse à la vitesse de rotation détectée par lesdits moyens détecteur de la vitesse de rotation (9, 10) au cours de la visualisation de ladite image mobile (171) et ladite image intervenante (172-179) d'une manière que ses positions visualisées puissent s'opposer à un changement en réponse à une instruction provenante desdits moyens d'instruction, caractérisé en ce que lesdits moyens de com mande (21) augmentent/réduisent la force de résistance contre la rotation de ladite unité de pédales par ladite charge en réponse à l'information de sortie desdits moyens (80) détecteur de l'état physique.

2. Appareil vélo d'entraînement selon la Revendication 1, dans lequel lesdits moyens générateur de signal d'image comprennent des moyens pour la génération d'un signal d'image indiquant l'image d'un obstacle afin de bloquer le mouvement de ladite image mobile en tant qu'image intervenante, ainsi qu'un signal d'image indiquant une image de fond, et lesdits moyens de commande comprennent des moyens pour la visualisation stationnaire de ladite image mobile dans une position verticale déterminée, pour le mouvement de ladite image de iond, et dans lequel la visualisation de ladite image mobile ann d'approcher séquentiellement ladite image d'obstacle sur la base de l'information de sortie desdits moyens détecteur de la vitesse de rotation, et la visualisation de ladite image d'obstacle se peuvent séparer de ladite image mobile en réponse à une instruction provenante desdits moyens d'instruction.

3. Appareil vélo d'entraînement selon la Revendication 1, dans lequel lesdits moyens générateur de signal d'image comprennent des moyens générateur d'un signal d'image représentant une image d'obstacle afin de bloquer le mouvement de ladite image mobile en tant qu'image intervenante, ainsi qu'un signal d'image indiquant une image de fond, et lesdits moyens de commande comprennent des moyens de visualisation stationnaire de ladite image mobile dans une position verticale déterminée sur l'écran de visualisation des moyens de visualisation, et dans lequel le mouvement de ladite image de fond et la visualisation de ladite image d'obstacle pour approcher séquentiellement ladite image mobile sur la base d'une in~ormation de sortie desdits moyens détecteur de la vitesse de rotation et la visualisation de ladite image mobile se peuvent séparer de ladite image d'obstacle en réponse à une instruction provenante desdits moyens d'instruction.

4. Appareil vélo d'entraînement selon la Revendication 1, dans lequel lesdits moyens générateur de signal d'image comprennent des moyens pour générer un signal d'image indiquant une image d'un poursuivant pour la poursuite de ladite image mobile en tant qu'image intervenante, ainsi qu'un signal d'image indiquant une image de iond, et lesdits moyens de commande comprennent des moyens pour la visualisation stationnaire de ladite image de fond sur l'écran de visualisation desdits moyens de visualisation, pour la visualisation de ladite image mobile à déplacer sur ledit écran de visualisation desdits moyens de visualisation sur la base de l'information de sortie desdits moyens détecteur de la vitesse de rotation, en visualisant ladite image d'un poursuivant pour la poursuite de l'image mobile et en changeant la direction de mouvement de ladite image mobile en réponse à une instruction provenante desdits moyens d'instruction.

5. Appareil vélo d'entraînement selon la Revendication 1, dans lequel lesdits moyens générateur de signal d'image comprennent des moyens pour générer un signal d'image indiquant une côte de montée ou une côte de descente, et lesdits moyens de commande comprennent des moyens pour commander lesdits moyens de visualisation à visualiser une côte de montée quand la force de résistance contre la rotation de l'unité de pédales par la charge s'augmente pendant que lesdits moyens de visualisations sont commandés à visualiser une côte de descente quand la force de résistance est réduite.

6. Appareil vélo d'entraînement selon la Revendication 1, dans lequel ledit vélo d'entraînement comprend un groupe de guidon, lesdits moyens générateur de signal d'image comprennent des moyens générateur d'un signal d'image indiquant un objet volant et sortant de ladite image mobile, lesdits moyens d'instruction comprennent des moyens générateur d'un signal de direction pour générer un signal de direction indiquant une direction de gauche ou de droite en réponse à un actionnement à la gauche ou la droite dudit groupe de guidon, et lesdits moyens de commande comprennent des moyens pour déplacer ladite image mobile apparente sur ledit écran de visualisation à la gauche ou à la droite en réponse à la génération dudit signal de direction indiquant la direction de gauche ou de droite par lesdits moyens générateur de signal de direction, en visualisant ladite image d'un objet volant provenant de ladite image mobile apparente sur ledit écran de visualisation et en la déplaçant vers ladite image intervenante en réponse à la génération simultanée des signaux de direction indiquants la direction de gauche ou de droite par lesdits moyens générateur de signal de direction, et en changeant la visualisation de ladite image intervenante quand ladite image d'un objet volant rencontre ladite image d'obstacle.

7. Appareil vélo d'entraînement selon la Revendication 1, dans lequel lesdits moyens de commande comprennent des moyens de calculation de la distance parcourue sur la base de la vitesse de rotation détectée par lesdits moyens détecteur de la vitesse de rotation, lesquels moyens de commande causent lesdits moyens de visualisation à visualiser, par affichage numérique ou analogique, ladite distance parcourue calculée.

8. Appareil vélo d'entraînement selon la Revendication 1, dans lequel lesdits moyens de commande comprennent des moyens de calculation de la vitesse de marche sur la base de la vitesse de rotation détectée par lesdits moyens détecteur de la vitesse de rotation, lesquels moyens de commande causent lesdits moyens de visualisation à visualiser, par affichage numérique ou analogique, ladite vitesse de marche calculée.

9. Appareil vélo d'entraînement selon la Revendication 1, dans lequel lesdits moyens de commande comprennent des moyens visualisants ladite image mobile et la causants à tomber quand la vitesse de rotation détectée par lesdits moyens détecteur de la vitesse de rotation tombe au-dessous d'une valeur déterminée.

10. Appareil vélo d'entraînement selon la Revendication 1, dans lequel le vélo d'entraînement comprend une roue tournée en reponse à l'actionnement de ladite unité de pédales, et lesdits moyens détecteur de la vitesse de rotation comprennent un capteur magnétique pour la génération d'un signal à impulsions en réponse à la rotation de ladite roue.

11. Appareil vélo d'entraînement selon la Revendication 1, dans lequel le vélo d'entraînement comprend une roue tournée en réponse à l'actionnement de ladite unité de pédales, et lesdits moyens détecteur de la vitesse de rotation comprennent un capteur photoélectrique pour la génération d'un signal à impulsions en réponse à la rotation de ladite roue.

12. Appareil vélo d'entraînement selon la Revendication 6, dans lequel lesdits moyens générateur de signal de direction comprennent des commutateurs fonctionnants respectivement en correspondance avec les guidons de gauche et de droite du vélo d'entraînement.

13. Appareil vélo d'entraînement selon la Revendication 12, dans lequel lesdits guidons comprennent des poignées, et lesdits com mutateurs comprennent des manocontacteurs pour fermer des contacts desdits poignées dès que lesdits guidons sont saisis par les mains.

14. Appareil vélo d'entraînement selon la Revendication 13, dans lequel lesdits guidons comprennent des poignées, et lesdits commutateurs comprennent des commutateurs rotatifs pour fermer des contacts desdits poignées dès que lesdits guidons sont tournés par les mains.

15. Appareil vélo d'entraînement selon la Revendication 12, dans lequel lesdits com mutateurs comprennent un commutateur photoélectrique pour la génération d'un signal de direction quand lesdits guidons sont tournés en sens de gauche ou de droite en dépassant un angle déterminé.

16. Appareil vélo d'entraînement selon la Revendication 1, dans lequel ladite charge comprend des moyens appliquants une résistance par frottement contre la rotation de ladite roue.

17. Appareil vélo d'entraînement selon la Revendication 1, dans lequel ladite charge comprend: un tambour disposé en position axiale relative à ladite roue, et des bobines qui établissent un courant de Foucault qui court dans ledit tambour.

FIG.1

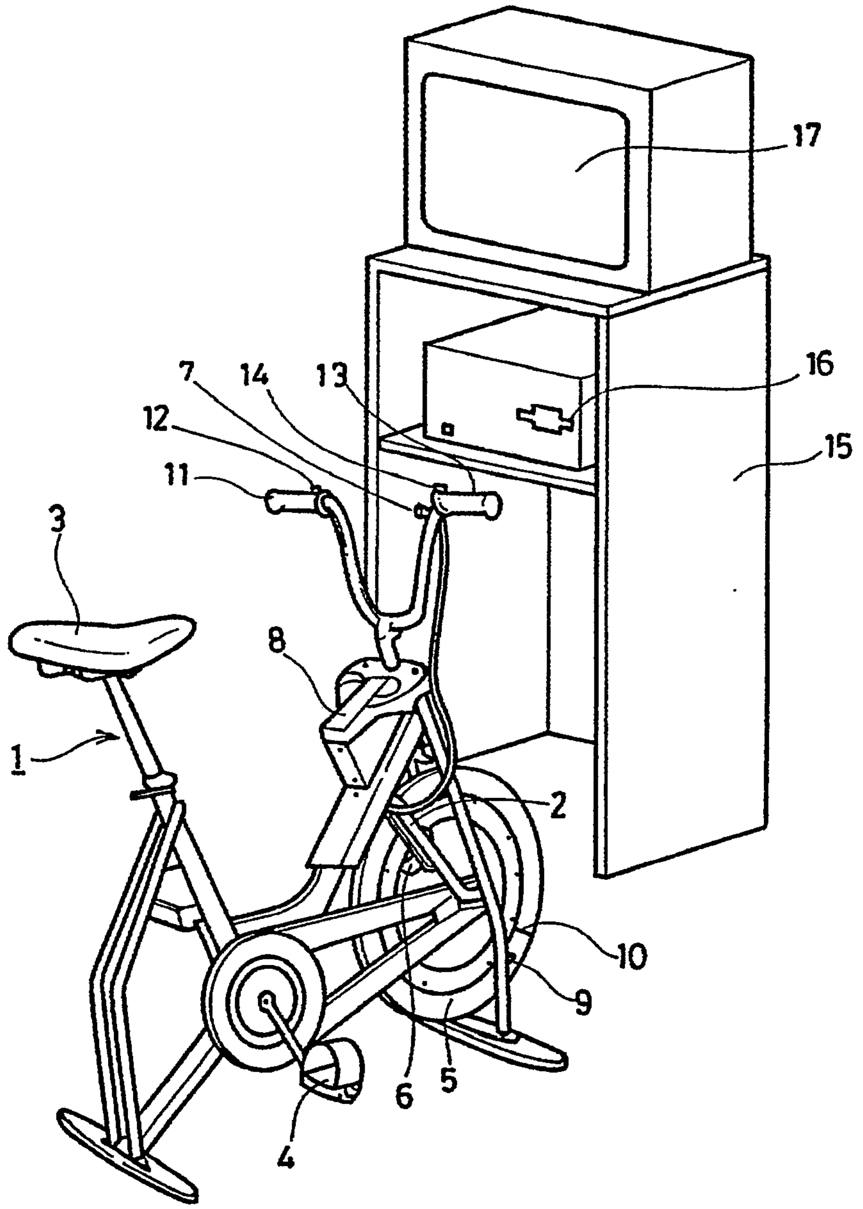

FIG.2

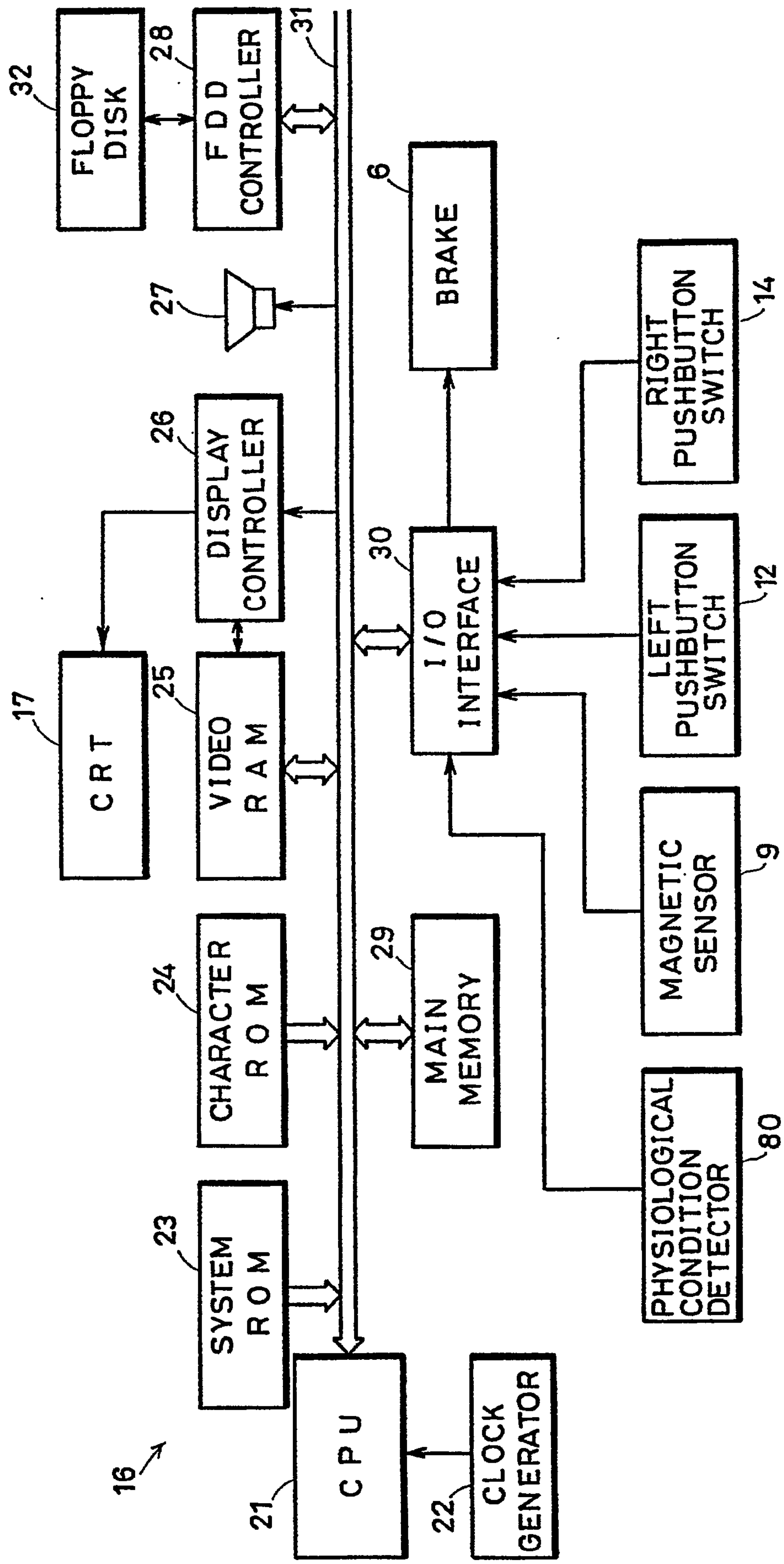
FLOPPY DISK
F D D CONTROLLER
BRAKE
DISPLAY CONTROLLER
C R T
VIDEO R A M
I / O INTERFACE
RIGHT PUSHBUTTON SWITCH
LEFT PUSHBUTTON SWITCH
MAGNETIC SENSOR
CHARACTER R O M
MAIN MEMORY
PHYSIOLOGICAL CONDITION DETECTOR
SYSTEM R O M
C P U
CLOCK GENERATOR
32
28
31
27
6
26
30
14
12
17
25
9
24
29
80
23
16
21
22

FIG.3

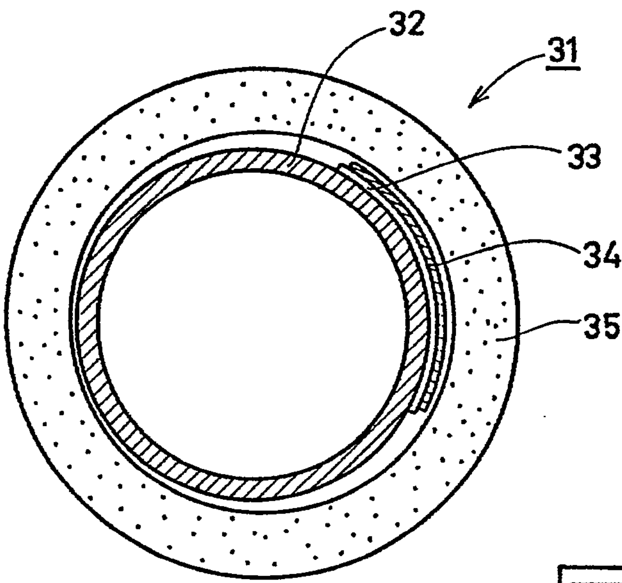


FIG.4

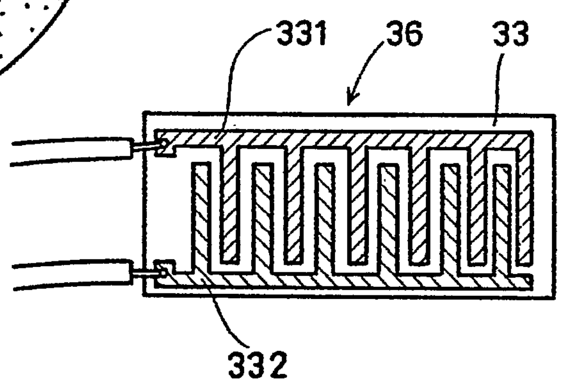


FIG.5

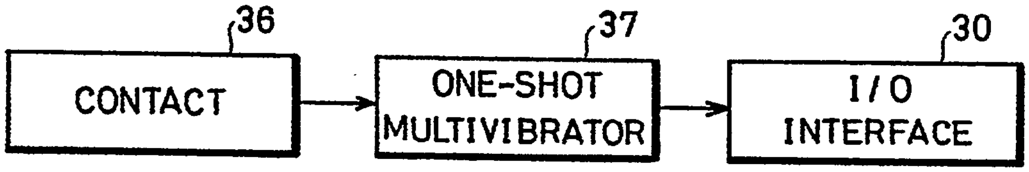


FIG.6

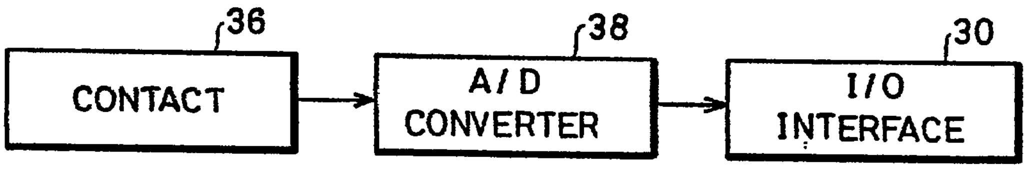

FIG.7

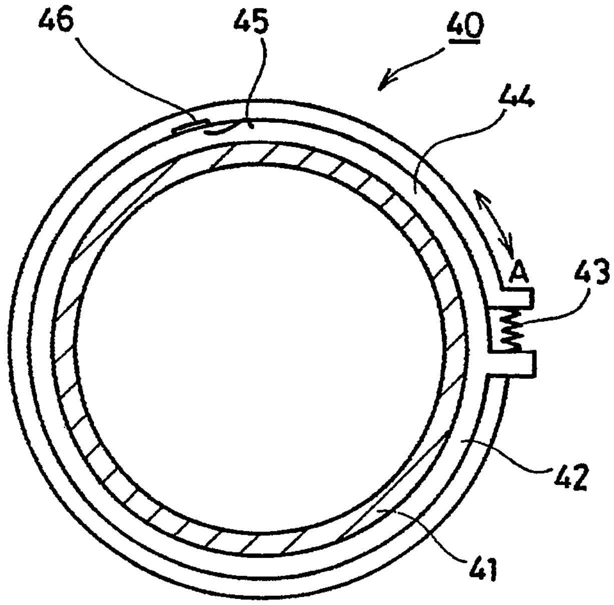


FIG.9

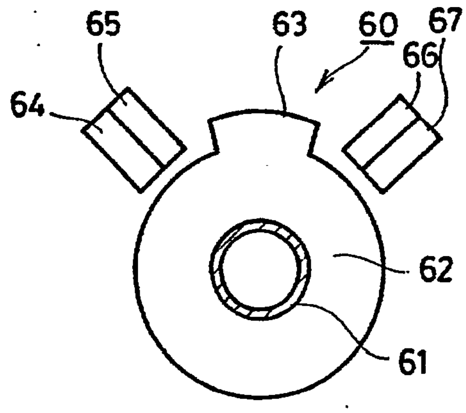


FIG.10

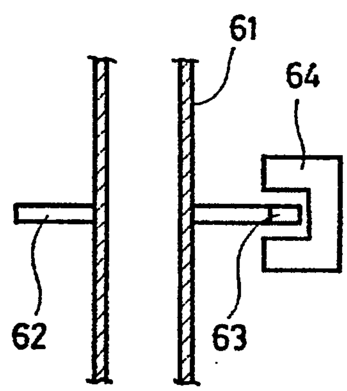


FIG.8

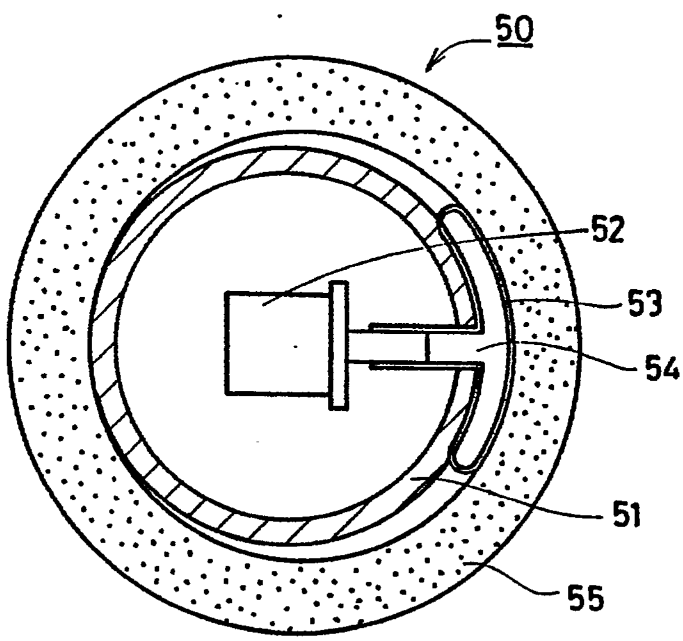

FIG.11

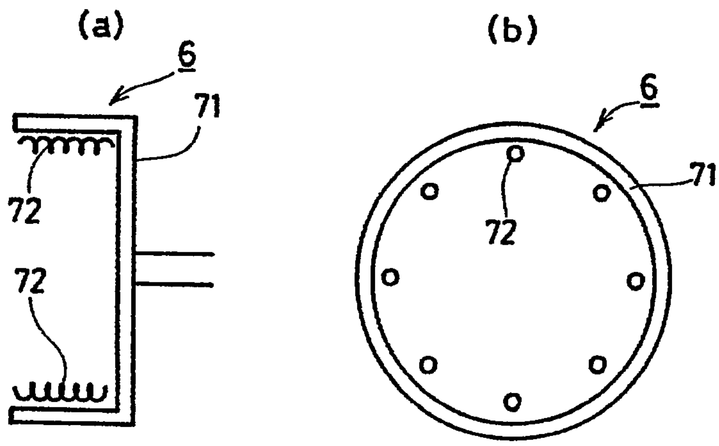


FIG.12

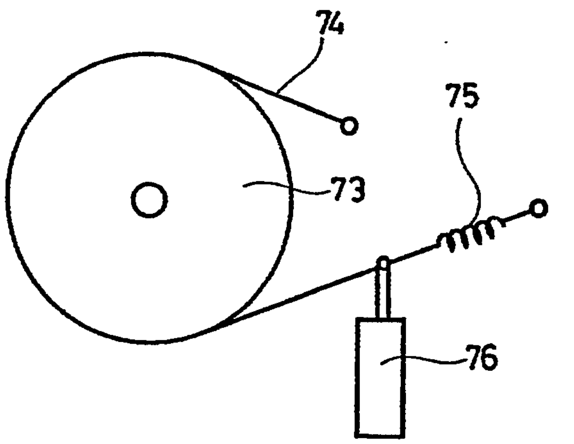

FIG.13

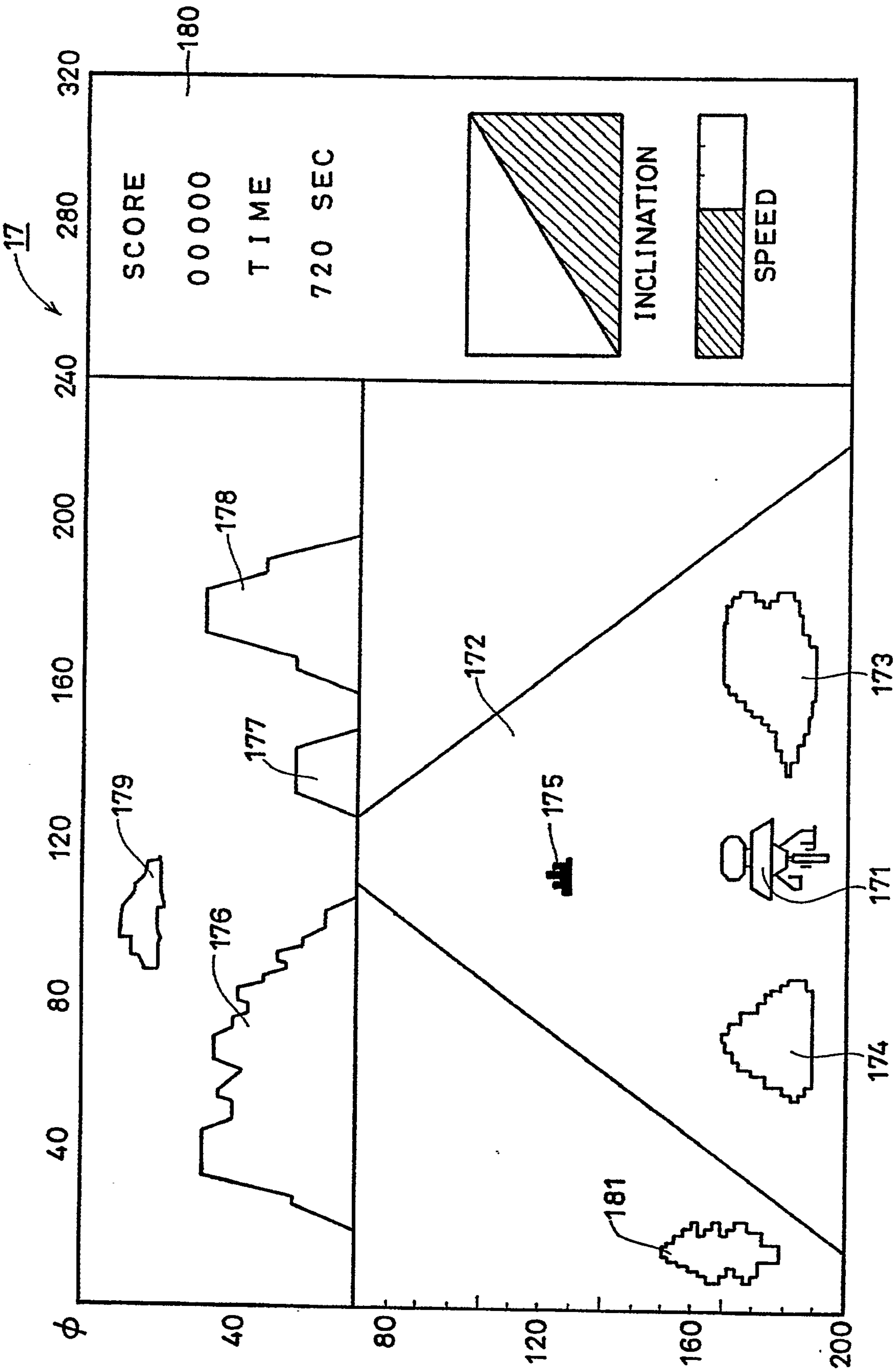
17
180
SCORE
00000
TIME
720 SEC
INCLINATION
SPEED
171
172
173
174
175
176
177
178
179
181
φ
40
80
120
160
200
240
280
320

FIG.14A

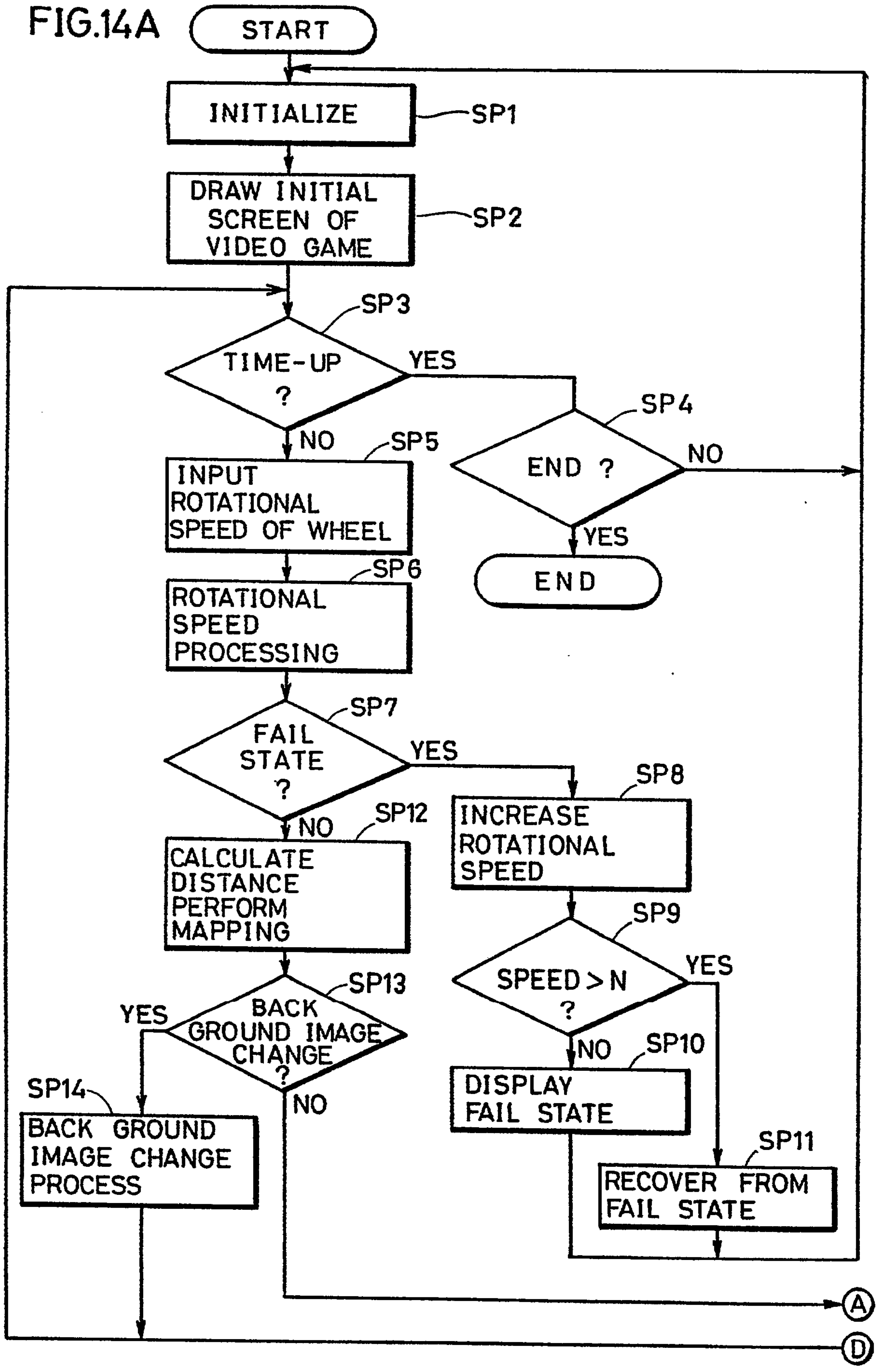
START
INITIALIZE
SP1
DRAW INITIAL SCREEN OF VIDEO GAME
SP2
SP3
TIME-UP ?
YES
SP4
END ?
NO
YES
END
NO
SP5
INPUT ROTATIONAL SPEED OF WHEEL
SP6
ROTATIONAL SPEED PROCESSING
SP7
FAIL STATE ?
YES
SP8
INCREASE ROTATIONAL SPEED
NO
SP12
CALCULATE DISTANCE PERFORM MAPPING
SP9
SPEED > N ?
YES
NO
SP10
DISPLAY FAIL STATE
SP11
RECOVER FROM FAIL STATE
SP13
BACK GROUND IMAGE CHANGE ?
YES
NO
SP14
BACK GROUND IMAGE CHANGE PROCESS
A
D

FIG.14B

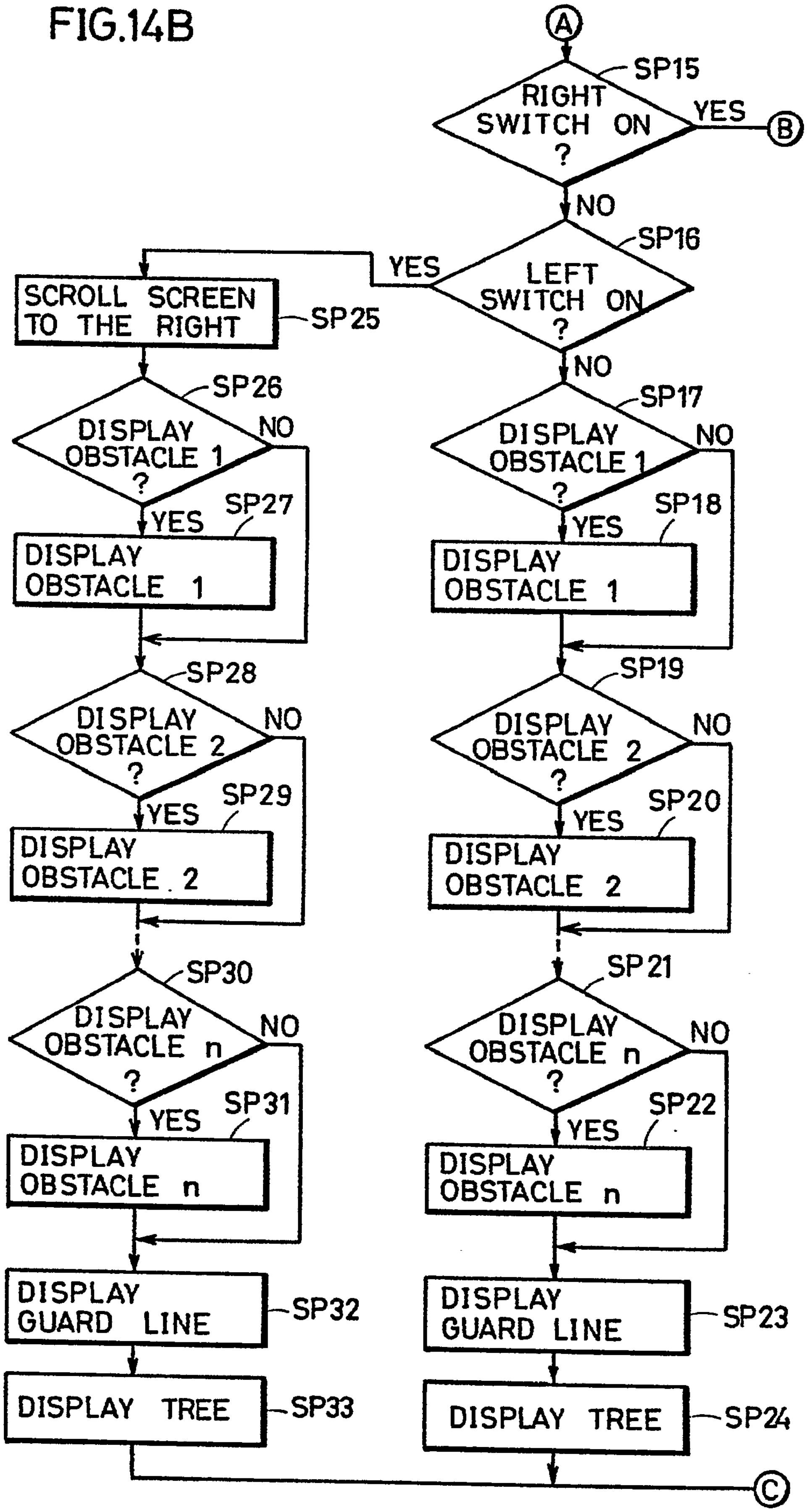
A
RIGHT SWITCH ON ?
SP15
YES
B
NO
LEFT SWITCH ON ?
SP16
YES
SCROLL SCREEN TO THE RIGHT
SP25
NO
DISPLAY OBSTACLE 1 ?
SP26
NO
YES
SP27
DISPLAY OBSTACLE 1
DISPLAY OBSTACLE 2 ?
SP28
NO
YES
SP29
DISPLAY OBSTACLE 2
DISPLAY OBSTACLE n ?
SP30
NO
YES
SP31
DISPLAY OBSTACLE n
DISPLAY GUARD LINE
SP32
DISPLAY TREE
SP33
DISPLAY OBSTACLE 1 ?
SP17
NO
YES
SP18
DISPLAY OBSTACLE 1
DISPLAY OBSTACLE 2 ?
SP19
NO
YES
SP20
DISPLAY OBSTACLE 2
DISPLAY OBSTACLE n ?
SP21
NO
YES
SP22
DISPLAY OBSTACLE n
DISPLAY GUARD LINE
SP23
DISPLAY TREE
SP24
C

FIG.14C

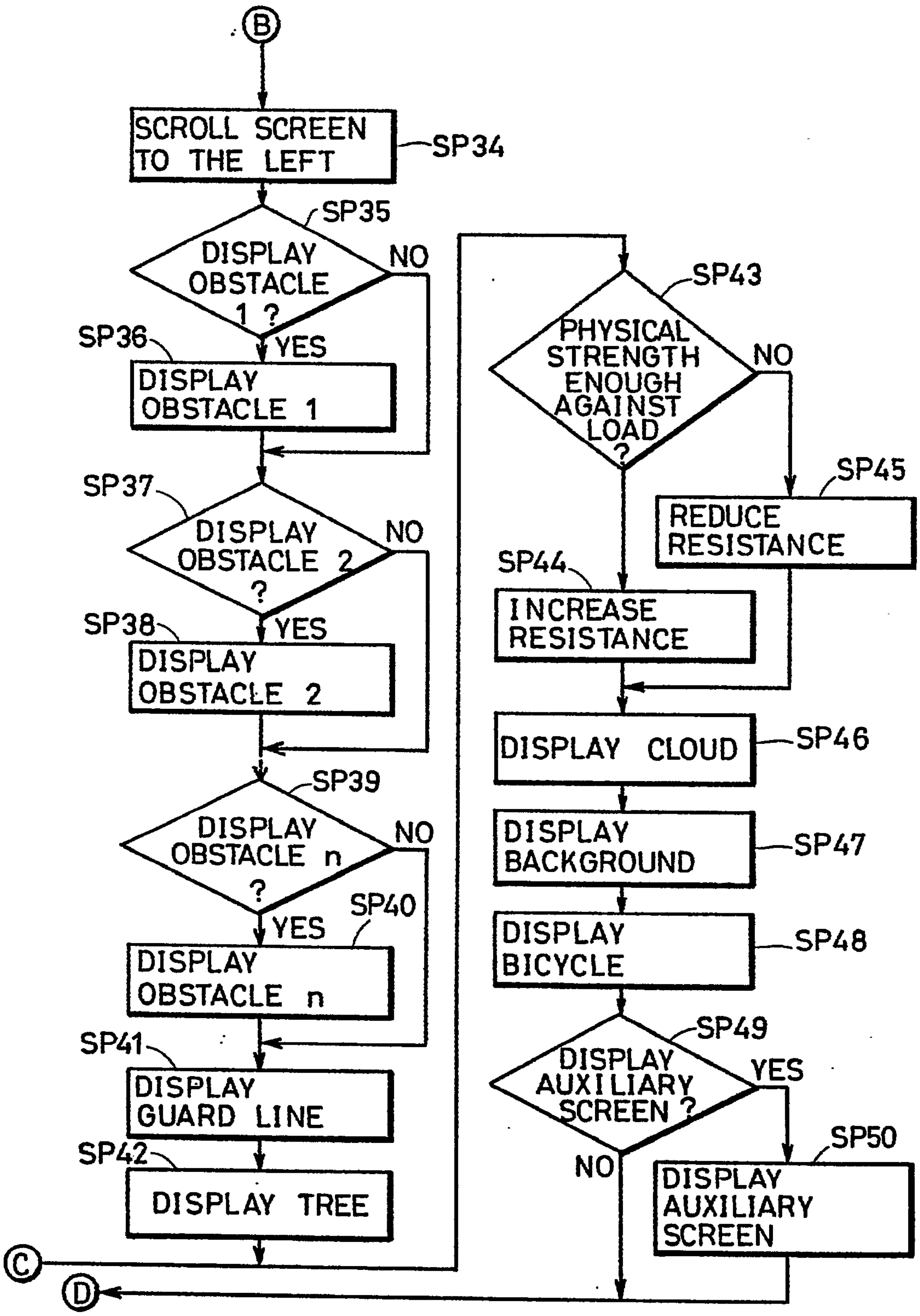
B
SCROLL SCREEN TO THE LEFT
SP34
SP35
DISPLAY OBSTACLE 1 ?
NO
YES
SP36
DISPLAY OBSTACLE 1
SP37
DISPLAY OBSTACLE 2 ?
NO
YES
SP38
DISPLAY OBSTACLE 2
SP39
DISPLAY OBSTACLE n ?
NO
YES
SP40
DISPLAY OBSTACLE n
SP41
DISPLAY GUARD LINE
SP42
DISPLAY TREE
C
D
SP43
PHYSICAL STRENGTH ENOUGH AGAINST LOAD ?
NO
SP45
REDUCE RESISTANCE
SP44
INCREASE RESISTANCE
DISPLAY CLOUD
SP46
DISPLAY BACKGROUND
SP47
DISPLAY BICYCLE
SP48
SP49
DISPLAY AUXILIARY SCREEN ?
YES
NO
SP50
DISPLAY AUXILIARY SCREEN

FIG.15

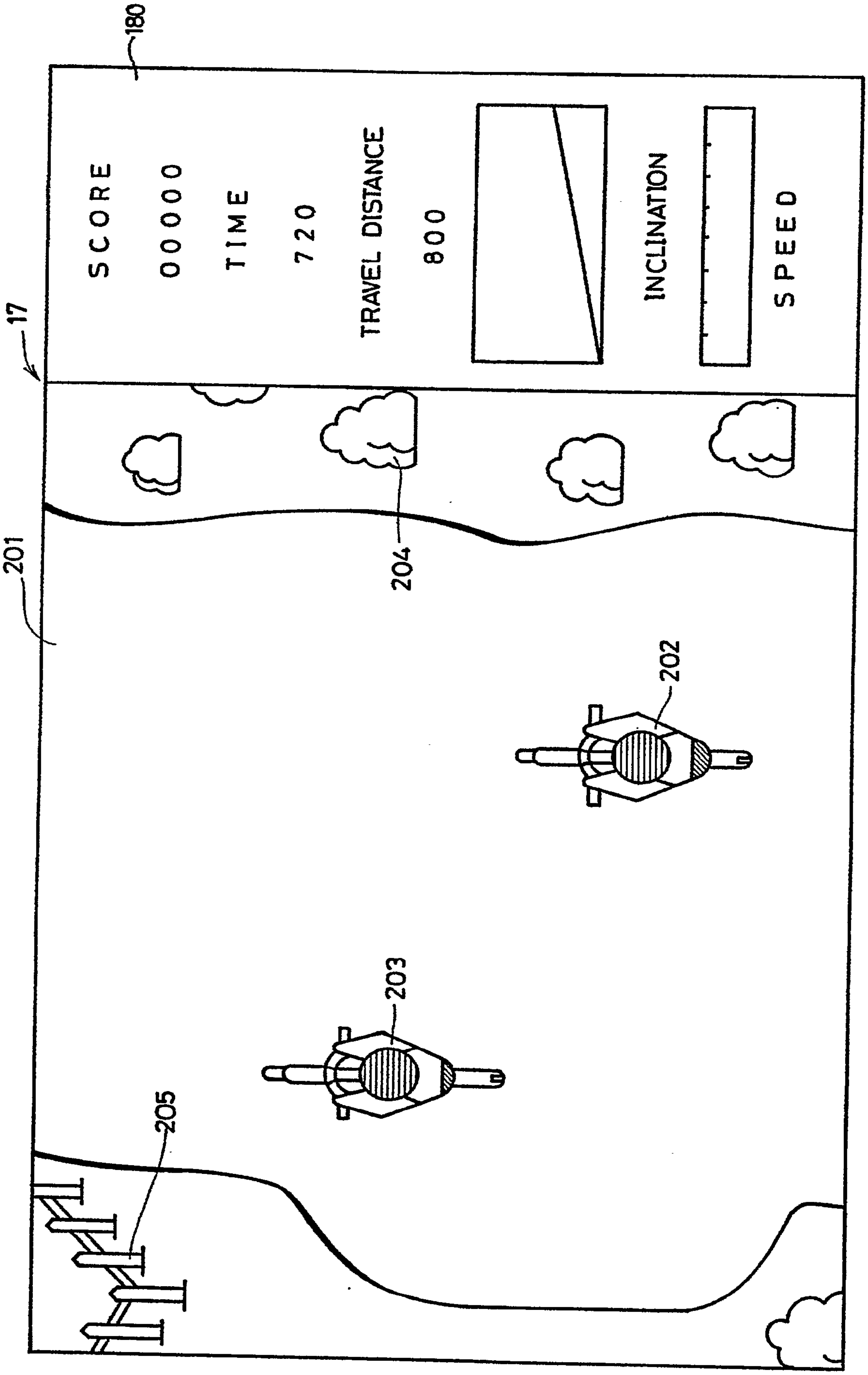
180
17
SCORE
00000
TIME
720
TRAVEL DISTANCE
800
INCLINATION
SPEED
201
204
202
203
205

FIG.16A

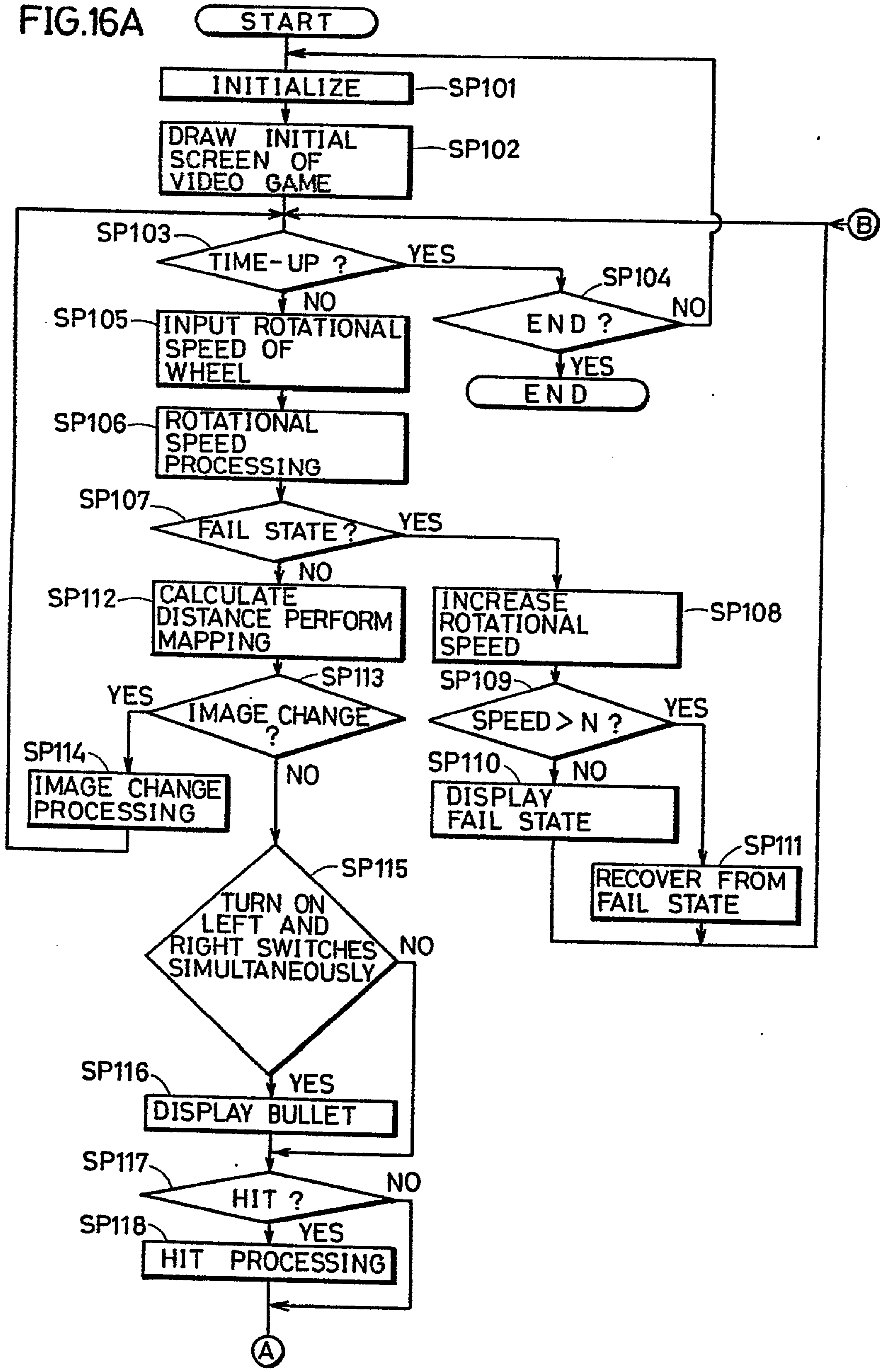
START
INITIALIZE
SP101
DRAW INITIAL SCREEN OF VIDEO GAME
SP102
SP103
TIME-UP ?
YES
NO
SP104
END ?
NO
YES
END
SP105
INPUT ROTATIONAL SPEED OF WHEEL
SP106
ROTATIONAL SPEED PROCESSING
SP107
FAIL STATE ?
YES
NO
SP112
CALCULATE DISTANCE PERFORM MAPPING
INCREASE ROTATIONAL SPEED
SP108
SP113
YES
IMAGE CHANGE ?
SP109
SPEED > N ?
YES
SP114
IMAGE CHANGE PROCESSING
NO
SP110
NO
DISPLAY FAIL STATE
SP111
RECOVER FROM FAIL STATE
SP115
TURN ON LEFT AND RIGHT SWITCHES SIMULTANEOUSLY
NO
SP116
YES
DISPLAY BULLET
SP117
HIT ?
NO
SP118
YES
HIT PROCESSING
A
B

FIG.16B

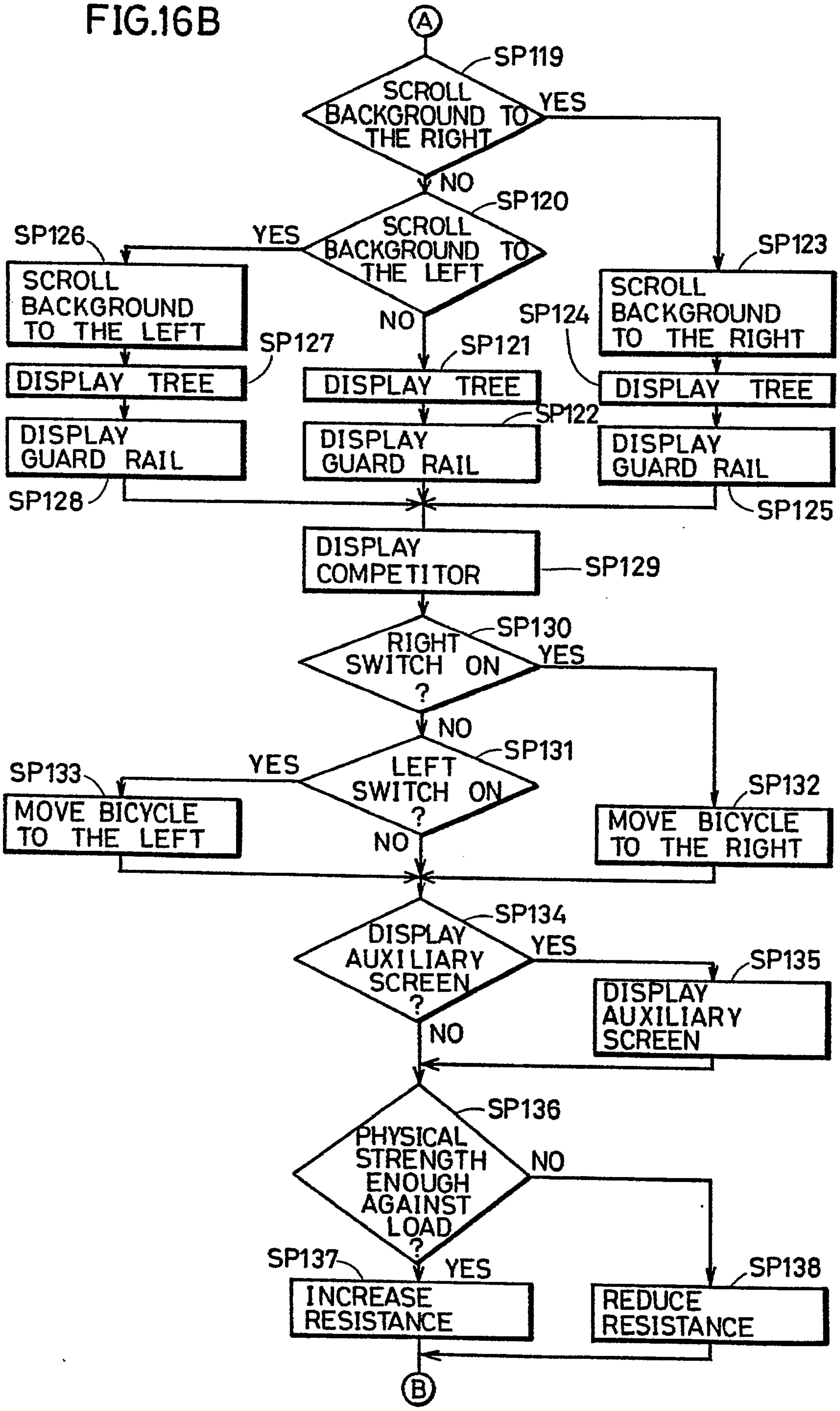
A
SP119
SCROLL BACKGROUND TO THE RIGHT
YES
NO
SP120
SCROLL BACKGROUND TO THE LEFT
YES
NO
SP126
SCROLL BACKGROUND TO THE LEFT
SP127
DISPLAY TREE
DISPLAY GUARD RAIL
SP128
SP121
DISPLAY TREE
SP122
DISPLAY GUARD RAIL
SP123
SCROLL BACKGROUND TO THE RIGHT
SP124
DISPLAY TREE
DISPLAY GUARD RAIL
SP125
DISPLAY COMPETITOR
SP129
SP130
RIGHT SWITCH ON ?
YES
NO
SP131
LEFT SWITCH ON ?
YES
NO
SP133
MOVE BICYCLE TO THE LEFT
SP132
MOVE BICYCLE TO THE RIGHT
SP134
DISPLAY AUXILIARY SCREEN ?
YES
NO
SP135
DISPLAY AUXILIARY SCREEN
SP136
PHYSICAL STRENGTH ENOUGH AGAINST LOAD ?
NO
YES
SP137
INCREASE RESISTANCE
SP138
REDUCE RESISTANCE
B

FIG.17

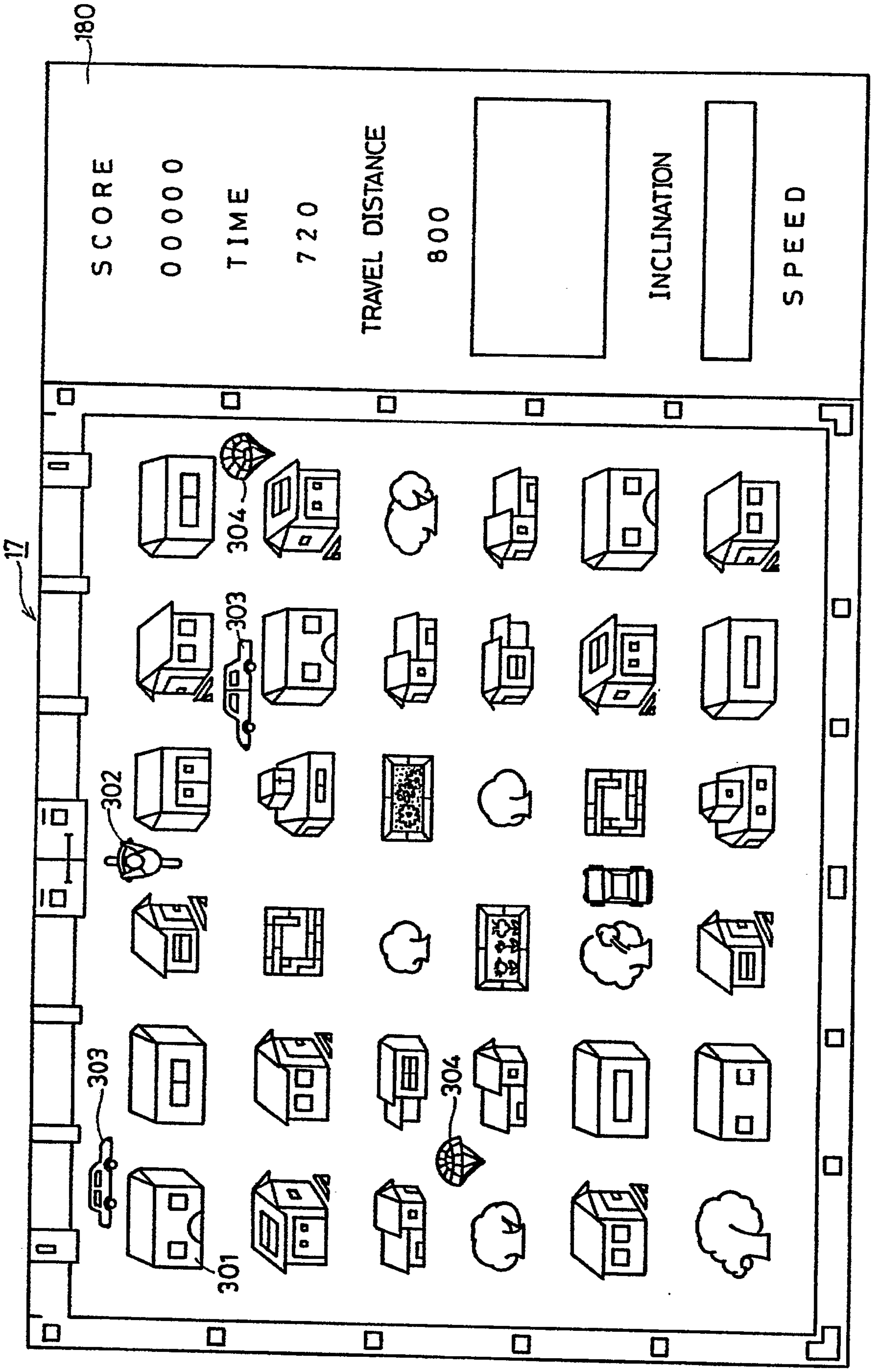

180
SCORE
00000
TIME
720
TRAVEL DISTANCE
800
INCLINATION
SPEED
17
301
302
303
304

FIG.18A

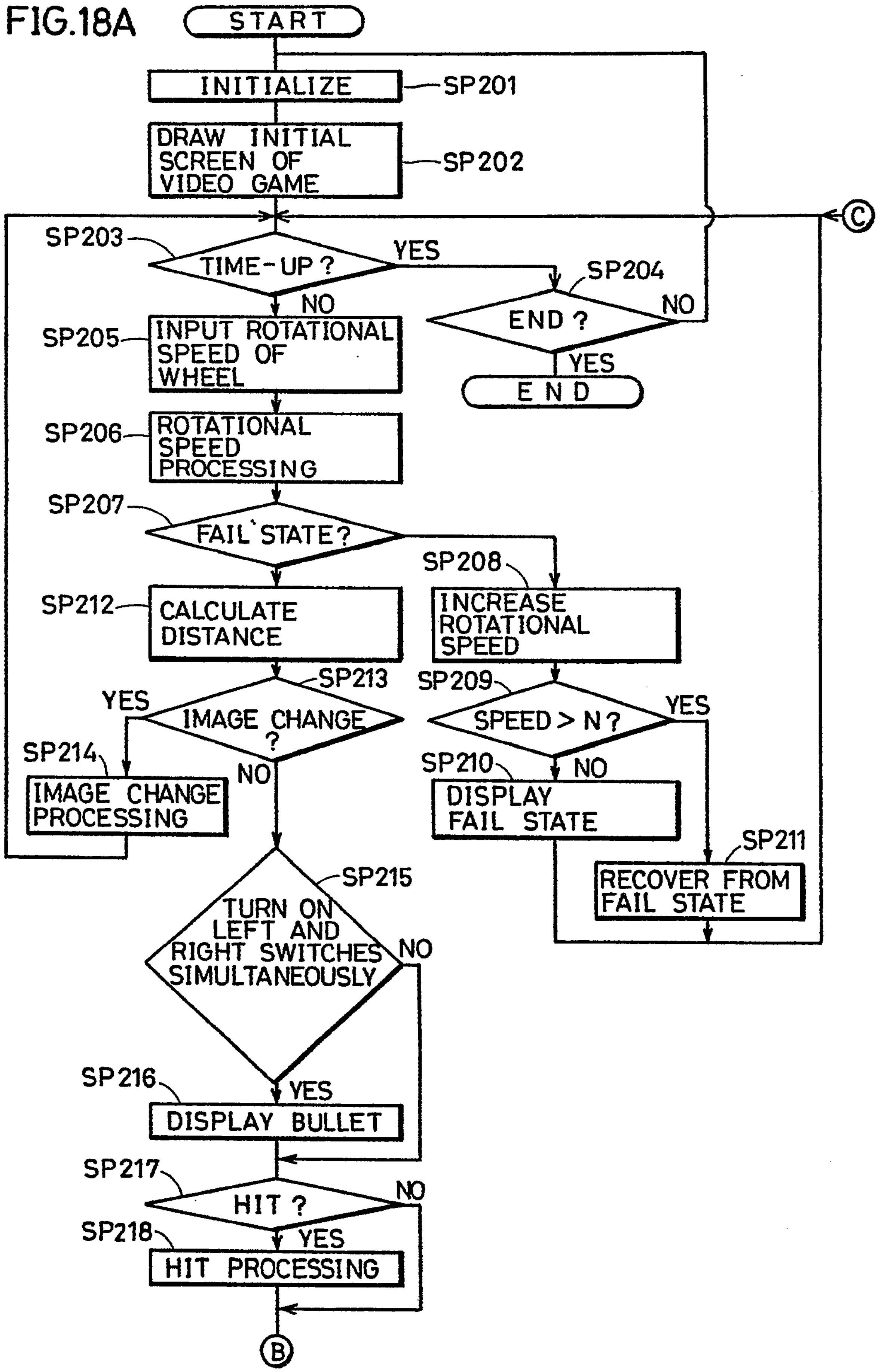
START
INITIALIZE
SP201
DRAW INITIAL SCREEN OF VIDEO GAME
SP202
SP203
TIME-UP ?
YES
NO
SP204
END ?
NO
YES
END
SP205
INPUT ROTATIONAL SPEED OF WHEEL
SP206
ROTATIONAL SPEED PROCESSING
SP207
FAIL STATE ?
SP208
INCREASE ROTATIONAL SPEED
SP212
CALCULATE DISTANCE
SP213
IMAGE CHANGE ?
YES
NO
SP214
IMAGE CHANGE PROCESSING
SP209
SPEED > N ?
YES
NO
SP210
DISPLAY FAIL STATE
SP211
RECOVER FROM FAIL STATE
C
SP215
TURN ON LEFT AND RIGHT SWITCHES SIMULTANEOUSLY
NO
YES
SP216
DISPLAY BULLET
SP217
HIT ?
NO
YES
SP218
HIT PROCESSING
B

FIG.18B

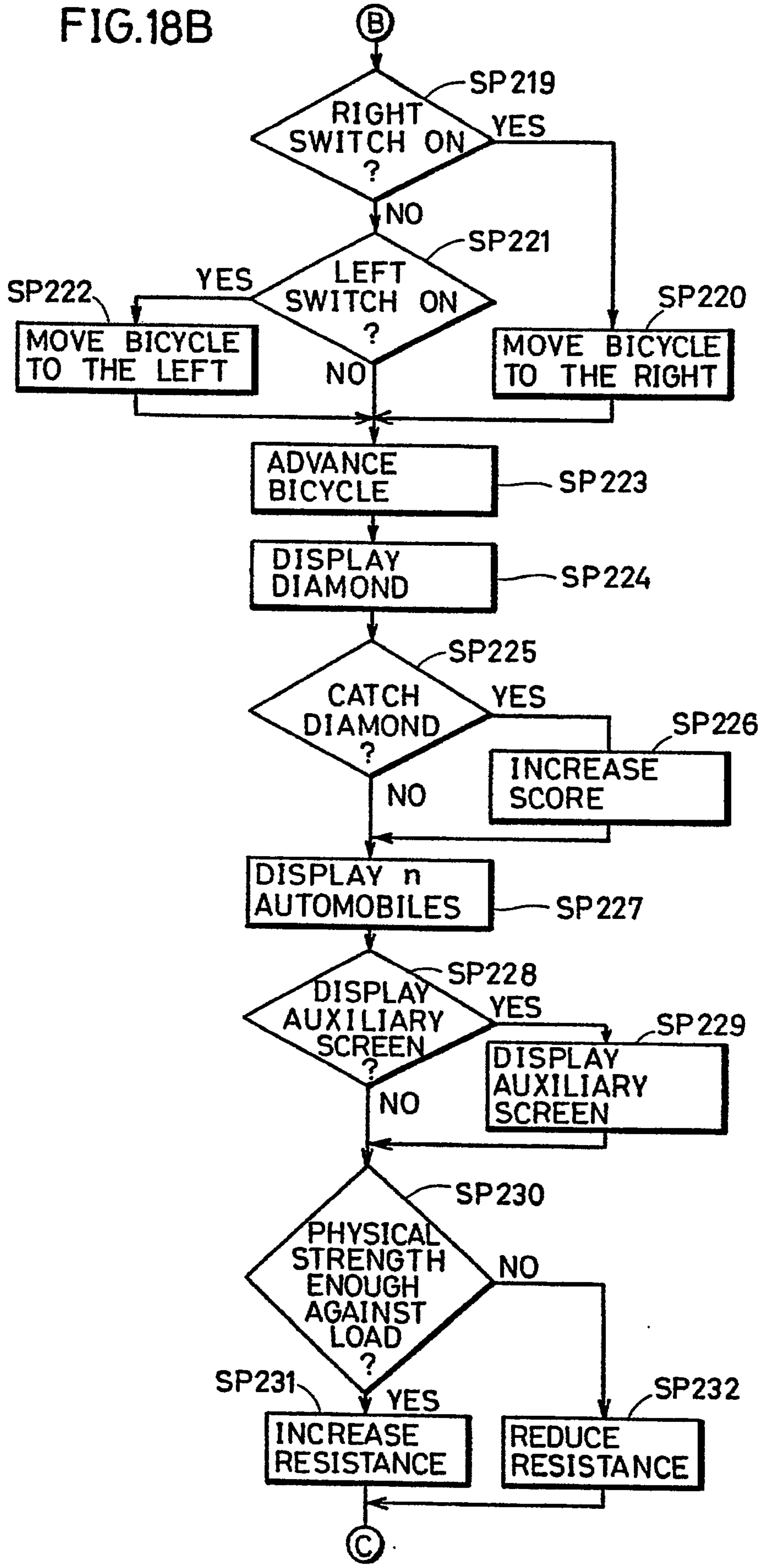
B
RIGHT SWITCH ON ?
SP219
YES
NO
LEFT SWITCH ON ?
SP221
YES
NO
SP222
MOVE BICYCLE TO THE LEFT
SP220
MOVE BICYCLE TO THE RIGHT
ADVANCE BICYCLE
SP223
DISPLAY DIAMOND
SP224
CATCH DIAMOND ?
SP225
YES
NO
INCREASE SCORE
SP226
DISPLAY n AUTOMOBILES
SP227
DISPLAY AUXILIARY SCREEN ?
SP228
YES
NO
DISPLAY AUXILIARY SCREEN
SP229
PHYSICAL STRENGTH ENOUGH AGAINST LOAD ?
SP230
NO
YES
SP231
INCREASE RESISTANCE
SP232
REDUCE RESISTANCE
C